Europäisches Patentamt

European Patent Office

Office européen des brevets

(11) Publication number: **0 433 071 A2**

## EUROPEAN PATENT APPLICATION

(21) Application number: **90313599.4**

(22) Date of filing: **13.12.90**

(51) Int. Cl.⁵: **G06F 15/403**

| |
|---|
| An annex to the description was included in the documents as originally filed but has since expressly been withdrawn by the applicant. |

(30) Priority: **15.12.89 US 452639**

(43) Date of publication of application:
**19.06.91 Bulletin 91/25**

(84) Designated Contracting States:
**DE FR GB**

(71) Applicant: **Hewlett-Packard Company**

P.O. Box 10301 3000 Hanover Street
Palo Alto California 94303-0890(US)

(72) Inventor: **Schmeling, Garth F.**
**10845 Roygor Road**
**Colorado Springs, Colorado 80908(US)**

(74) Representative: **Colgan, Stephen James et al**
**CARPMAELS & RANSFORD 43 Bloomsbury**
**Square**
**London WC1A 2RA(GB)**

(54) Method and apparatus for management of non-uniform data.

(57) A method and apparatus for data management of non-uniform data operates as modules suitable for inclusion into existing applications. The create module is used to create an original data file when an existing application incorporating the create module has output. The access module is used to map the original data file when a second application incorporating the access module requires the original data file for input. The mapping occurs according to a predetermined definition. In one embodiment, the application-specific states used in a first design verification application are mapped to states in a common data set for applications in the design verification application domain. The common data set is one of several common data sets which contain only states which are valid for all applications in the design verification application domain.

FIG 50

# METHOD AND APPARATUS FOR MANAGEMENT OF NON-UNIFORM DATA

A microfiche containing the source code listing for a preferred embodiment of the present invention is attached.

Background of the Invention

This invention relates to the management, storage, and retrieval of non-uniform (application-specific) data for computer applications, and more particularly relates to data management for computer applications relating to design verification and analysis of logic circuits.

For the purpose of this document, the following definitions apply:

"Application" is a computer program with a specific purpose.

"Application domain"" is a set of applications with complementary purposes.

"Design verification application domain" is an application domain for verification of circuit design.

"Non-uniform data" is data that is valid only for a particular application within an application domain; application-specific data.

"Common data" is data that is valid for all applications within an application domain; uniform data.

"Non-uniform data set" is the set of all valid data for a particular application; it may contain common or non-uniform data. Each application within an application domain will have only one corresponding non-uniform data set.

"Common data set" is a set of data elements which are valid for all applications within a domain of applications.

"Original data file" is a file created by a particular application containing elements of the non-uniform data set for that application.

Computer applications are well known in the industry and are created and used for a variety of purposes. Additionally, it is common practice to create computer applications which are used in different phases of similar operations, each application having separate and independent, but related purposes. Some of these applications in an application domain produce data, others use (or consume) data which has been produced, some both produce and consume data.

The data produced by a particular application in an original data file contains non-uniform (application-specific) data. This data often must be used by another application in the application domain for an independent purpose.

A problem is caused within an application domain by the need for data produced by one application to be consumed by a second application. Because original data files from different applications contain non-uniform data, the use of an original data file by another application requires the development of an application-specific link. The sole purpose of the application-specific link is to convert the non-uniform data in the original data file to data which is usable by the receiving application. To facilitate efficient interaction between applications, a separate application-specific link is required between each consumer and each producer of data within the application domain. Development and maintenance of these links becomes increasingly difficult, time-consuming, and expensive, as the number of data producers and consumers increases. If the number of data producers is N, the number of data consumers is M, and the number of applications which are both producers and consumers is L, the number of application-specific links can be as high as $((N \times M) - L)$. Consequently, if a new producer is added to the application domain, every consumer must create an application-specific link for that producer. Since the tendency is for various application domains to increase in size, this problem also continues to increase in size and scope.

One application domain known in the art is the design verification application domain. The domain includes various applications for the creation, simulation, verification, analysis and test of logic circuits. These applications may verify logic circuit performance by describing the circuit under test using a library of modules, each module representing a discrete circuit element which defines outputs for various inputs of the element, a netlist which describes the connections between discrete elements, and a state table which maintains current states of the discrete elements. When these applications are presented with initial states and input data, the applications will produce output data which must be analyzed to determine whether a circuit under test successfully fulfills the circuit designer's goals. The output data in these applications often consists of a set of events, each event containing a time and corresponding trace state from a set of available trace states, in which each trace corresponds to a particular input or output node of a discrete circuit element in a circuit under test.

Other applications also exist in the design verification application domain for analyzing data from simulation applications. Such applications may be used to determine whether race conditions exist and must be removed, whether unstable status may cause varying outcomes, and whether various other problems exist in the circuit design. Such capabilities provide circuit designers a relatively inexpensive and rapid method of verifying designs prior to realizing the design in hardware. It is necessary that these applications have the capability to use data produced by simulation applications.

It is a problem that different applications within the design verification application domain produce non-uniform data, and require application-specific links for the conversion of non-uniform data to data which is usable by the consuming application. In particular, the application may produce data which consists of a series of events. The events are comprised of a time and corresponding trace state. One application may have an internal definition for 17 different trace states, while another application may have an internal definition for only 12 trace states. The internal definitions may vary from application to application. It is a problem to create, implement, and maintain application-specific links for each producer-consumer relationship having incompatible internal definitions.

Summary of the Invention

In accordance with the preferred embodiment of the present invention, a method and apparatus for data management is provided which includes a create module for creating an original data file and an access module for mapping the original data file into a common data set according to a predetermined mapping definition as the data is accessed. In one embodiment, the creating module and access module are incorporated into all applications within an application domain.

As an application within an application domain produces results to be saved as an output data file, the application will use the create module to create an original data file. When a second application requires the original data file for input, the second application uses the access module to access the original data file. A predetermined mapping definition dictates how the non-uniform data set shall be mapped to a common data set. The original data file is mapped from the non-uniform data set to a common data set as required for input to the second application.

One advantage of this solution is that the creating and accessing modules will act as a link between every producer and consumer of data in the system. Another advantage is that new data producers may be added to the system and will receive immediate access to existing data. Also, existing data consumers will have immediate access to the new producers' data. All that is required is a mapping definition for each application which is a producer of data and incorporation of the modules into all applications. Application code maintenance is greatly facilitated because all functions necessary for creating and accessing data exist in a single code library which is incorporated into the data producing and consuming applications. Library maintenance automatically maintains the existing applications. Additionally, the data is stored in a single data file which saves space. Upon access, the data is mapped for use but a second data file is not created. Also, this method is fast and inexpensive.

The modules may each be considered a library of commands which are available for use in the application domain which incorporates the modules. The commands available make the extraction of data and the mapping of data fast and efficient.

This solution is available for any application domain. In particular, this solution is appropriate for any application domain having a swept variable. Two examples are the time application domain having time as a swept variable or the frequency response application domain having frequency as the swept variable.

In the case where time is the swept variable, this solution is valid for both analog and digital application domains. In the digital application domain, this solution is valid for the design verification application domain.

In embodiments relating to design verification technology, the mapping definition for the first original file maps the set of valid trace states for an application to a common data set for trace states. Consequently, the data is immediately available for consumption in a second application in the design verification application domain.

In one embodiment, the modules allow both sequential and random access methods of extracting events. In particular, an event may be extracted via a get_event process or a get_state process. The get_event process acquires the next event (state change and time) or group of events (a specific number of events). The get_state process acquires the state at a particular time. The get__state process may be specified as inclusive (retrieving the changed state if a change occurs at the particular time) or exclusive (retrieving the unchanged state if a change occurs at the particular time). This facilitates efficient event extraction.

In one embodiment, the modules allow multiple methods of data access. In particular, data may be

EP 0 433 071 A2

accessed according to the non-uniform data set or according to one of the predetermined common data sets. The application may specify the start time or the end time when accessing a subset of the available data.

In one embodiment, the modules are compiled and ready to be incorporated into existing applications during the linking process. The modules are written in the C + + programming language and have an ANSI C interface. The modules also take advantage of a B + tree index data structure, which is known in the art and is fast and efficient.

Brief Description of the Drawings

Figure 1 shows a flow diagram for the DRopen function.
Figure 2 shows a flow diagram for the read_globals subroutine.
Figure 3 shows a flow diagram for the DRaddorigin function.
Figure 4 shows a flow diagram for the DRaddcrdate function.
Figure 5 shows a flow diagram for the DRaddctname function.
Figure 6 shows a flow diagram for the DRaddtimescale function.
Figure 7 shows a flow diagram for the DRaddgattr function.
Figure 8 shows a flow diagram for the DRaddtrace function.
Figure 9 shows a flow diagram for the DRaddtattr function.
Figure 10 shows a flow diagram for the DRaddinitstate function.
Figure 11 shows a flow diagram for the DRaddevent function.
Figure 12 shows a flow diagram for the addgroup subroutine.
Figure 13 shows a flow diagram for the DRaddgrevent function.
Figure 14 shows a flow diagram for the DRgetorigin function.
Figure 15 shows a flow diagram for the DRgetcrdate function.
Figure 16 shows a flow diagram for the DRgetctname function.
Figure 17 shows a flow diagram for the DRgettimescale function.
Figure 18 shows a flow diagram for the DRgetmaxevent function.
Figure 19 shows a flow diagram for the DRgetDRDSversion function.
Figure 20 shows a flow diagram for the DRgetmachine function.
Figure 21 shows a flow diagram for the DRgetgattr function.
Figure 22 shows a flow diagram for the DRlistgattr function.
Figure 23 shows a flow diagram for the DRgetgattrtotal function.
Figure 24 shows a flow diagram for the DRgettracetotal function.
Figure 25 shows a flow diagram for the DRgetindex function.
Figure 26 shows a flow diagram for the DRgetfirsttrace function.
Figure 27 shows a flow diagram for the DRgetnexttrace function.
Figure 28 shows a flow diagram for the DRgetfirsttype function.
Figure 29 shows a flow diagram for the DRgetnexttype function.
Figure 30 shows a flow diagram for the DRgetmode function.
Figure 31 shows a flow diagram for the read_trace subroutine.
Figure 32 shows a flow diagram for the DRgettattr function.
Figure 33 shows a flow diagram for the DRlisttattr function.
Figure 34 shows a flow diagram for the DRgettattrtotal function.
Figure 35 shows a flow diagram for the DRmaplogic function.
Figure 36 shows a flow diagram for the DRsetstart function.
Figure 37 shows a flow diagram for the DRsetend function.
Figure 38 shows a flow diagram for the DRgetinitstate function.
Figure 39 shows a flow diagram for the setupindices subroutine.
Figure 40 shows a flow diagram for the resetindices subroutine.
Figure 41 shows a flow diagram for the DRgetevent function.
Figure 42 shows a flow diagram for the DRgetgrevent function.
Figure 43 shows a flow diagram for the DRgetstate function.
Figure 44 shows a flow diagram for the DRclosetrace function.
Figure 45 shows a flow diagram for the DRclose function.
Figure 46 shows the state of the prior art.
Figure 47 shows a state diagram for creating a DRDS.
Figure 48 shows a state diagram for accessing a DRDS.

4

Figure 49 shows the data manager in accordance with the preferred embodiment of the present invention.

Figure 50 shows an example of mapping original data sets to common data sets.

## Detailed Description of the Preferred Embodiment

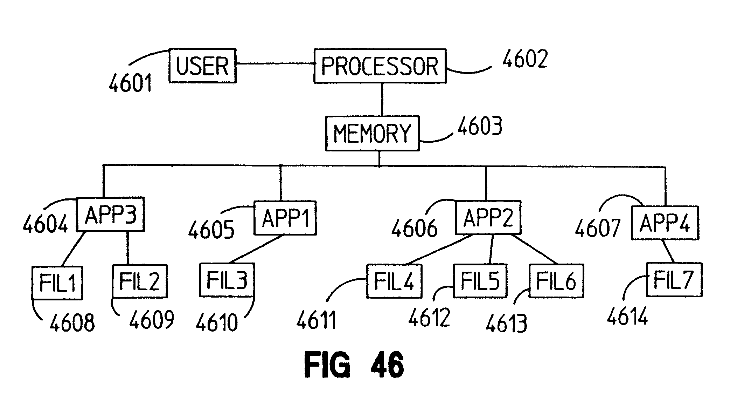

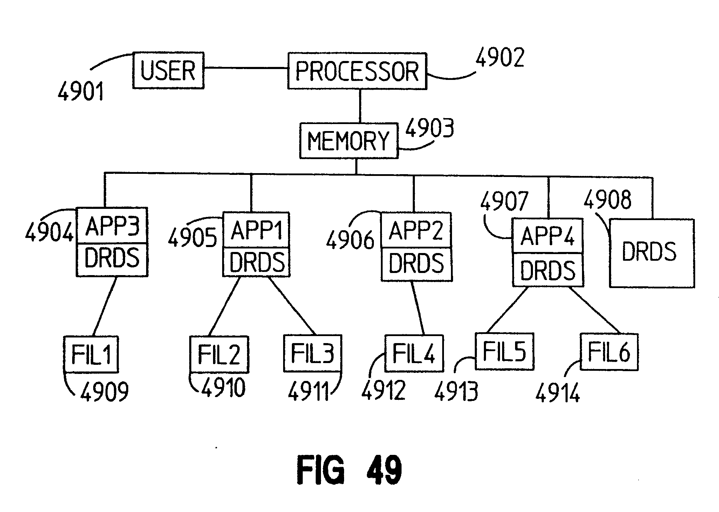

Figures 46 and 49 show the data manager in accordance with the preferred embodiment of the present invention as related to a prior art arrangement. In Figure 46 showing the state of the prior art, a user at an access device 4601 uses a computer processor 4602 which is attached to a memory 4603. The processor 4602 may be a workstation, and the memory 4603 may be a disc drive. Several applications 4604, 4605, 4606, and 4607 comprising an application domain exist in memory 4603 for use by the user 4601. The applications produce output and consume input, or produce and consume data. The applications have produced various original data files; application 4604 has produced file 4608 and file 4609, application 4605 has produced file 4610, application 4606 has produced file 4611, file 4612, and file 4613, and application 4607 has produced file 4614. The original data files are specific to the producing application, because the data contained within the files is non-uniform data. To enable, for example, application 4605 to use file 4614, a link has to be developed which converts the non-uniform data of original file 4614 to the data set of application 4605. To enable application 4607 to use file 4610, a second link has to be developed which converts the non-uniform data of original file 4610 to the data set of application 4607. If all applications produce and consume data, twelve individual links must be created for all the applications of this example to access other applications' files.

In Figure 49, the user 4901, the processor 4902, and the memory 4903 function similarly to Figure 46. However, in this embodiment the data manager 4908 also resides in memory. Data manager 4908 is used with design verification applications in this example and is also known as a Digital Results Data Store (DRDS). When the applications 4904, 4905, 4906, and 4907 (comprising an applications domain) are compiled (and made available for use), each application incorporates the data manager 4908 into the application such that all non-uniform data sets produced by the applications (stored in files 4909, 4910, 4911, 4912, 4913, and 4914) are stored as usual, but will map the non-uniform (application-specific) data to a common data set upon access by a data consuming application in the application domain. The data manager 4908 as incorporated into each application uses a predetermined mapping definition to translate the non-uniform data to one of a plurality of common data sets. The elements of the common data sets are valid for all applications operating on the processor 4902. Consequently, the twelve separate links between applications are not required because the data manager 4908 creates a single solution.

This solution is valid for several application domains. In particular the embodiment disclosed here is an appropriate solution for the design verification application domain. In this domain the embodiment described here is valid for both digital and analog application domains. The conversion of this embodiment for use in the frequency response application domain only requires the application of information which is well known in the art.

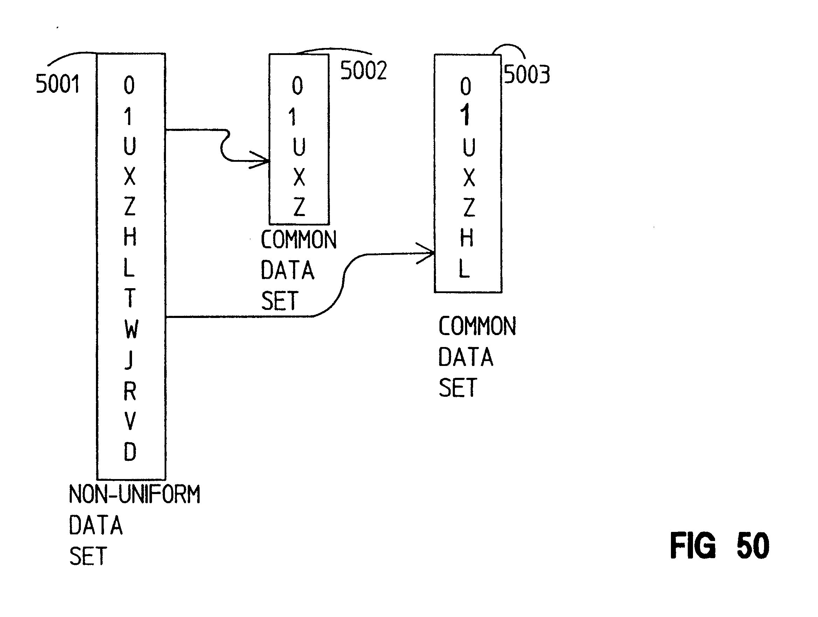

Figure 50 shows an example of mapping non-uniform data sets to common data sets. In this example, the non-uniform data set 5001 contains all valid data for a particular application. An original data file created by an application having data set 5001 will contain only the data of non-uniform data set 5001. When the original data file (as created by the application from the available choices in non-uniform data set 5001) is accessed by another application in the application domain (which will not accept as valid the elements T, W, J, R, V, and D, for example), the mapping definition is used to provide the accessing application with elements of one of the common data sets. If the common data set 5003 is used, one possibility is that the elements 0, 1, U, X, Z, H, and L of non-uniform data set 5001 will be mapped to the corresponding element of common data set 5003, and the remaining elements of non-uniform data set 5001 will be mapped to element U of common data set 5003 as the data of the original data file is required by the accessing application. There are a number of other possibilities.

In one embodiment, the DRDS software is implemented in the form of an HP-UX code library with a standard ANSI C interface that allows it to be compiled into any application which produces or consumes digital events. This allows it to function as data integration technology. Any application that runs on an HP platform and in the HP-UX operating system may compile the DRDS library into its application code and use it to produce a DRDS file representing a digital data set. This file may be read by any other application that has compiled the DRDS library into its code. An advantage of this invention is that all creation and access routines are located in a single library with a standard interface. This prevents the producer and consumer of digital data from having to create its own set of functions.

Using the preferred embodiment of the present invention, a fast and efficient data manager was developed. The system is extensible in that attributes and values may be added at the global level or at the trace level. The system supports 64 bit time values. The system requires only 10.6 bytes per event. On a 4 MIPS machine, this solution can store and access more than 7000 events per second. This solution also supports accessing events one at a time or in groups. Additionally, this solution supports getting a state of a trace at a particular time, while including or excluding an event occurring at that time.

The various aspects of the particular embodiment of the data manager for applications operating in a digital design verification application domain are described in a series of flow diagrams below. Additionally, a copy of the source listing for the data manager is attached in a microfiche format.

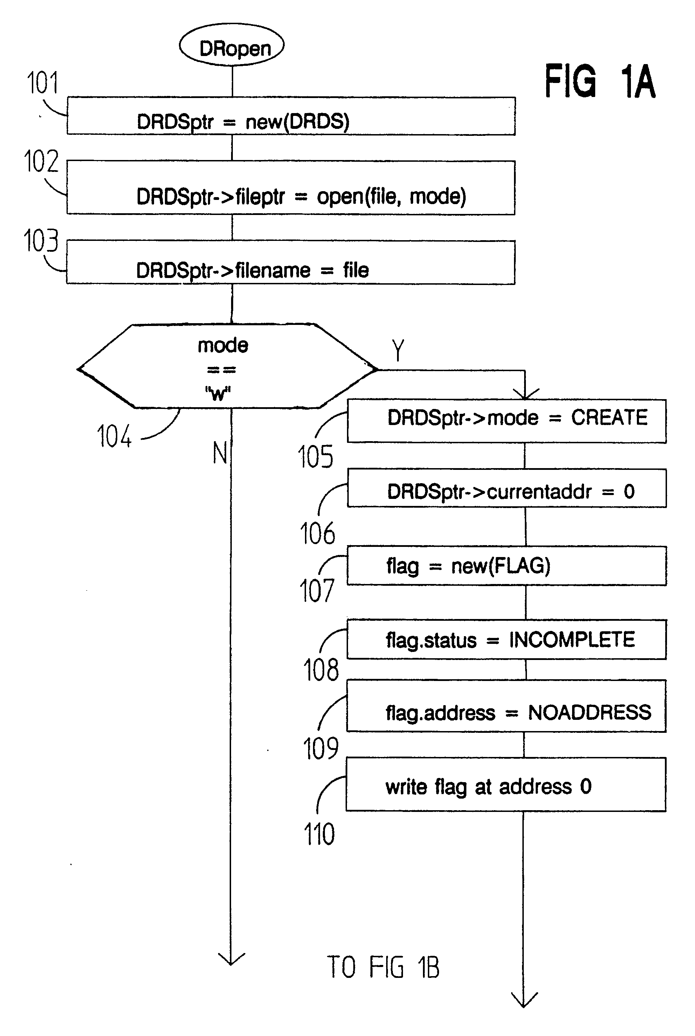

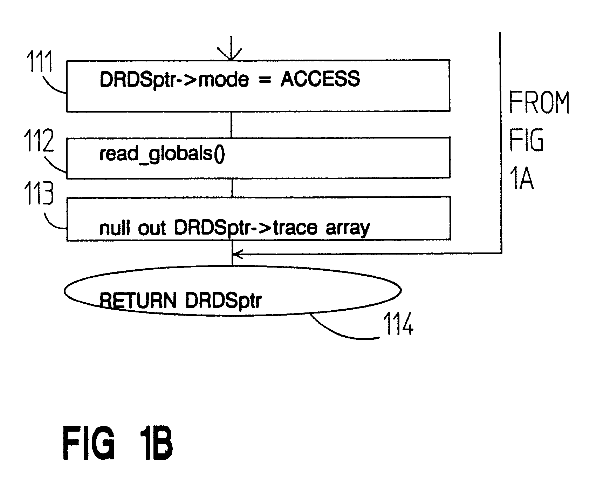

Figure 1 shows a flow diagram for the DRopen function. DRopen opens a Digital Results Data Set (DRDS) in the file represented by the file parameter on the host indicated by the host parameter. In block 101 a new DRDS structure (See Table 1) is created and assigned to the DRDSptr. In block 102 the DRDS file is opened and its file pointer is assigned to DRDSptr->fileptr. In block 103 the file name is assigned to DRDSptr->filename. Decision 104 tests if the mode parameter is "w" (write). If it is, blocks 105 through 110 are executed. In block 105 the symbolic constant CREATE is assigned to DRDSptr->mode. In block 106, zero is assigned to the current address in DRDSptr-> currentaddr. In blocks 107 through 110, a new FLAG structure (See Table 1) is created, assigned default values and written to the zero address of the file. Blocks 111 through 113 are executed when the mode does not equal "w". Block 111 assigns a mode of ACCESS to DRDSptr->mode. In block 112, the read__globals subroutine is executed. If its return value is negative, this function returns the error to the calling routine. In block 113 the array of traces, DRDSptr->trace, is assigned the NULL value. In block 114, the DRDSptr is returned to the calling routine.

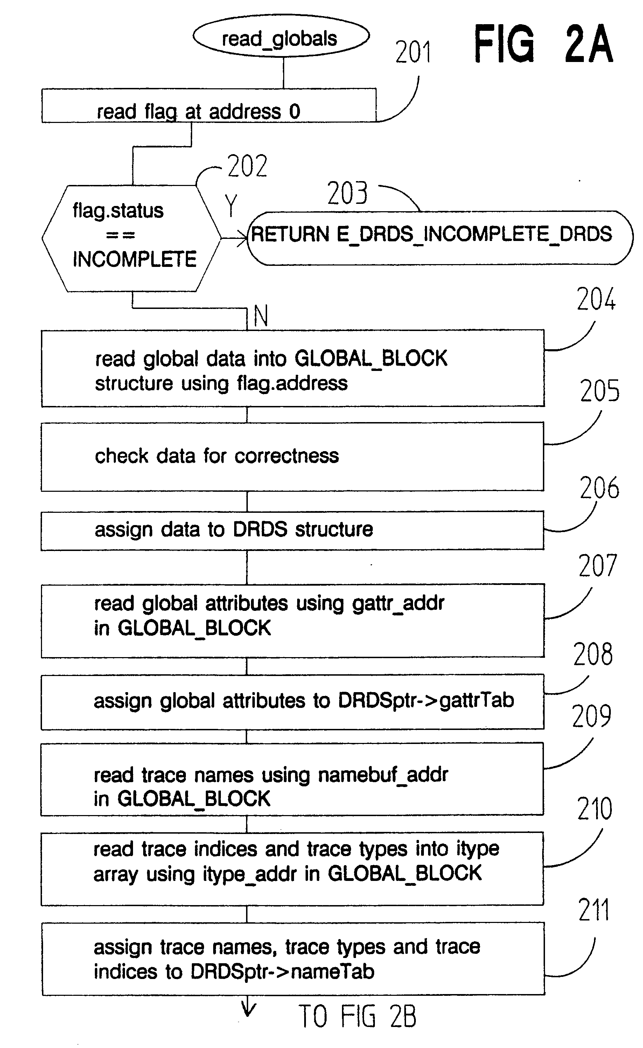

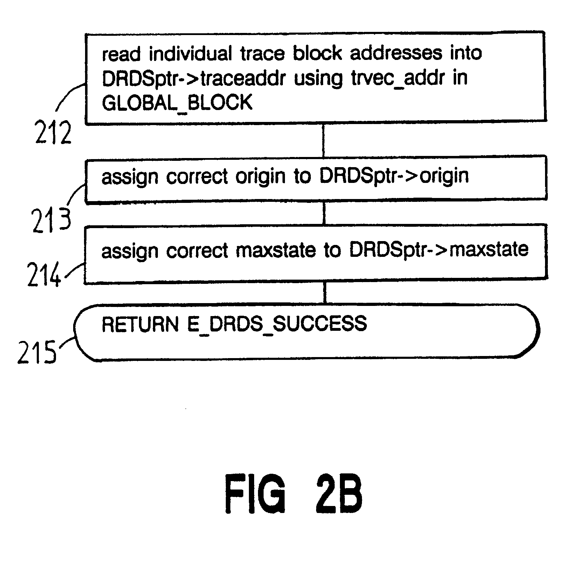

Figure 2 shows a flow diagram for the read__globals subroutine. Read__globals reads all global data from the DRDS file and puts it in the DRDS structure. In block 201 the flag at address 0 is read. In decision 202 the status in flag is checked to see if it is INCOMPLETE. If the flag status is INCOMPLETE, in block 203, a negative error value is returned to the calling function. In block 204 all global data is read into a GLOBAL__BLOCK (See Table 1) using the address in flag.address. In block 205, this data is checked for correctness. If there are errors, a negative error value is returned to the calling function. In block 206, the correct values are assigned to the DRDS structure. In block 207, global attributes are read into a character buffer using the gattr__addr address in GLOBAL__BLOCK. In block 208, these global attributes are assigned to the global attribute hash table, DRDSptr->gattrTab. In block 209 trace names are read using the namebuf__addr address in GLOBAL__BLOCK. In block 210, trace indices and trace types are read using the itype__addr in GLOBAL__BLOCK. In block 211, trace names, trace types and trace indices are assigned to the NAMECELL hashtable, DRDSptr->nameTab. In block 212, individual trace block addresses are read into the trace address array, DRDSptr->traceaddr, using the trvec__addr in GLOBAL__BLOCK. In blocks 213 and 214,the correct origin is assigned to DRDSptr->origin and the correct maxstate is assigned to DRDSptr->maxstate. In block 215, SUCCESS is returned to the calling function.

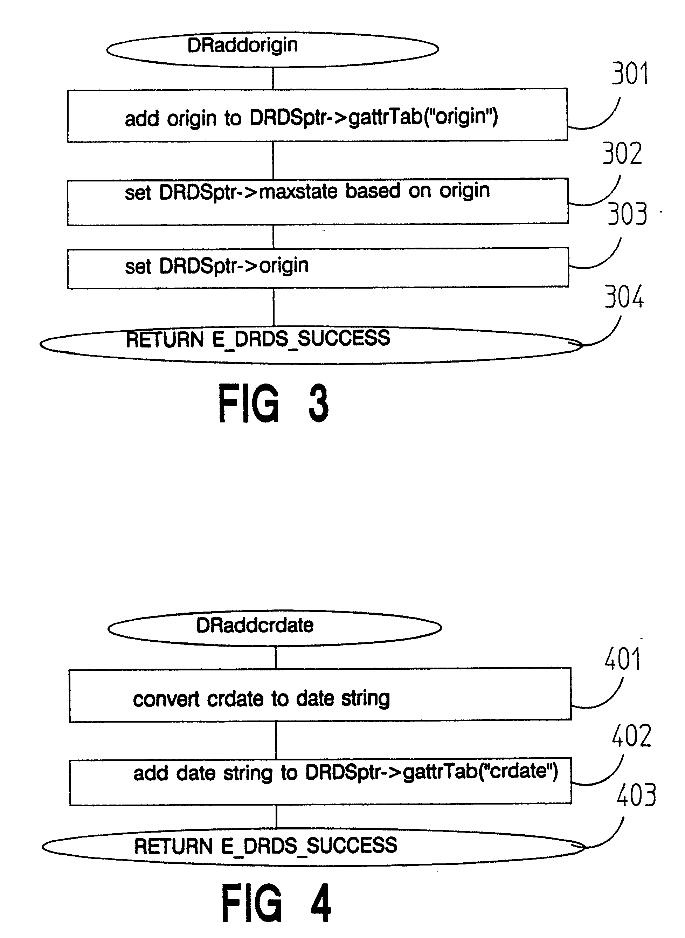

Figure 3 shows a flow diagram for the DRaddorigin function. DRaddorigin adds the origin of a set of data to a DRDS. In block 301 the origin is added to the global attribute table, DRDSptr->gattrTab. In block 302 the maximum allowable state for this origin is set in DRDSptr->maxstate. In block 303 the origin is set in DRDSptr->origin. In block 304, SUCCESS is returned to the calling procedure.

Figure 4 shows a flow diagram for the DRaddcrdate function. DRaddcrdate adds the creation date of a set of data to a DRDS. In block 401, the crdate integer is converted to a date string. In block 402 the creation date string is added to the global attribute table, DRDSptr->gattrTab, under name "crdate". In block 403, SUCCESS is returned to the calling procedure.

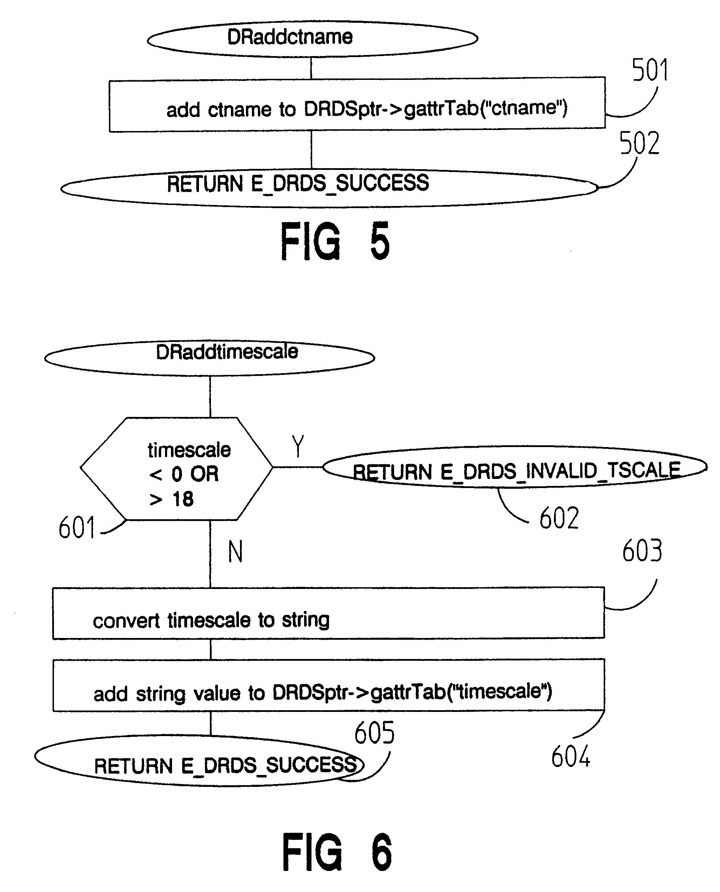

Figure 5 shows a flow diagram for the DRaddctname function. DRaddctname adds the circuit name associated with this set of data to a DRDS. In block 501, the ctname is added to the global attribute table, DRDSptr->gattrTab, under name "ctname". In block 502, SUCCESS is returned to the calling procedure.

Figure 6 shows a flow diagram for the DRaddtimescale function. DRaddtimescale adds the time scale (resolution for all time values) for this set of data to a DRDS. In block 601, the timescale is converted to a string value. In block 602, the value is added to the global attribute table, DRDSptr->gattrTab,under name "timescale". In block 603, SUCCESS is returned to the calling procedure.

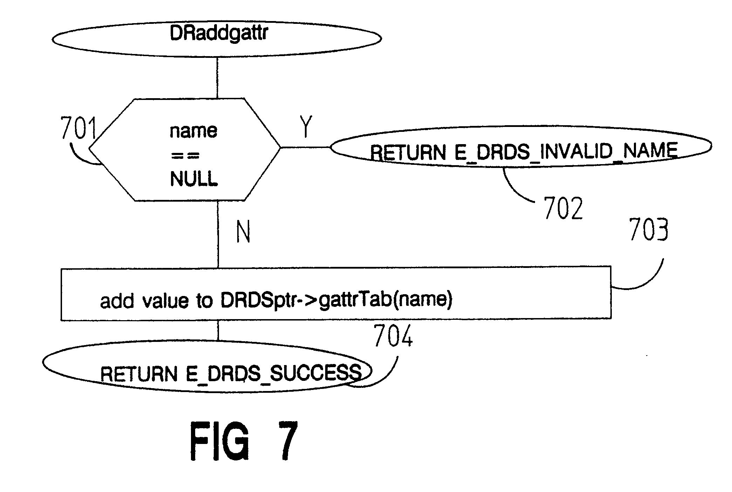

Figure 7 shows a flow diagram for the DRaddgattr function. DRaddgattr adds a global attribute and its value to a DRDS. In decision 701, the name is checked to see if it is NULL. If it is, in block 702, a negative error value is returned to the calling procedure. In block 703, the global attribute value is added to the global attribute table, DRDSptr->gattrTab under the global attribute name. In block 704, SUCCESS is returned to the calling procedure.

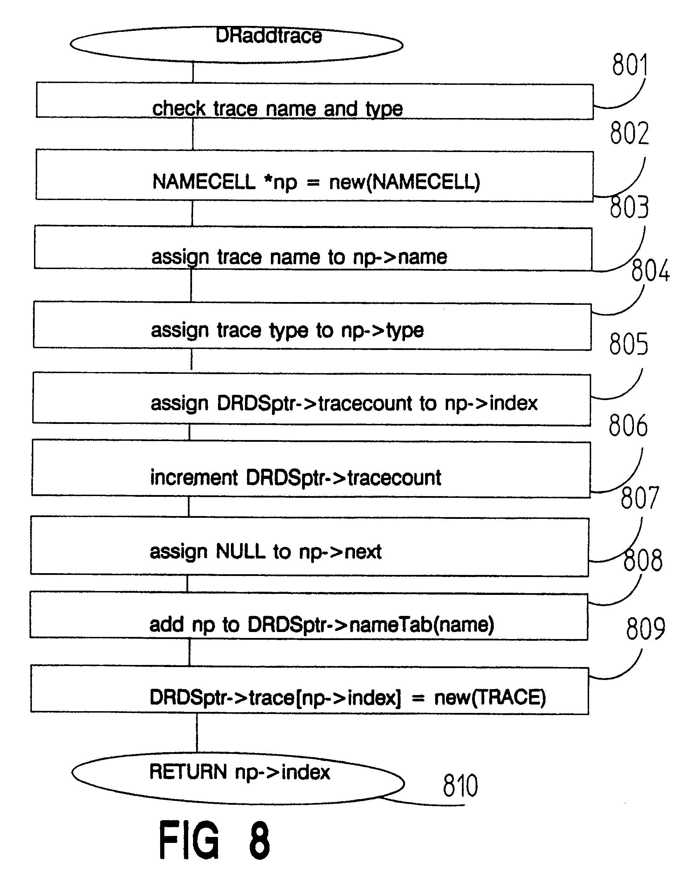

Figure 8 shows a flow diagram for the DRaddtrace function. DRaddtrace adds a new trace name and its type to a DRDS and returns the trace's index to the calling procedure. In block 801, the name and type are checked to see if they are correct. In blocks 802 through 807, a new NAMECELL structure (see Table 1) is created and the trace name, trace type, trace index and next pointer values are assigned. The trace count in DRDSptr->tracecount is also incremented. In block 808, this NAMECELL is added to the NAMECELL table in DRDSptr->nameTab. In block 809, the TRACE structure (see Table 1) associated with this trace is created in the DRDSptr->trace array. In block 809, the trace index is returned to the calling procedure.

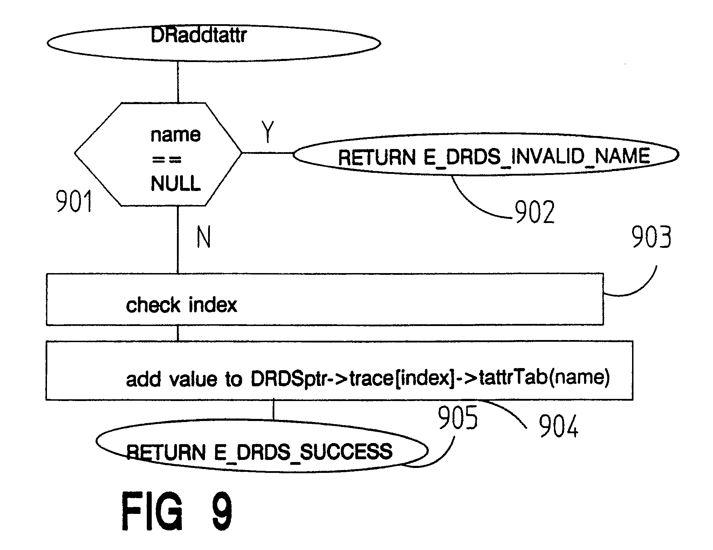

Figure 9 shows a flow diagram for the DRaddtattr function. DRaddtattr adds a trace attribute name and its value to a DRDS. In decision 901, the trace attribute name is checked to see if it is NULL. If it is, in block 902, a negative error value is returned to the calling procedure. In block 903, the trace attribute value is added to the trace attribute table, DRDSptr->trace[index]->tattrTab under the trace attribute name. In block 904, SUCCESS is returned to the calling procedure.

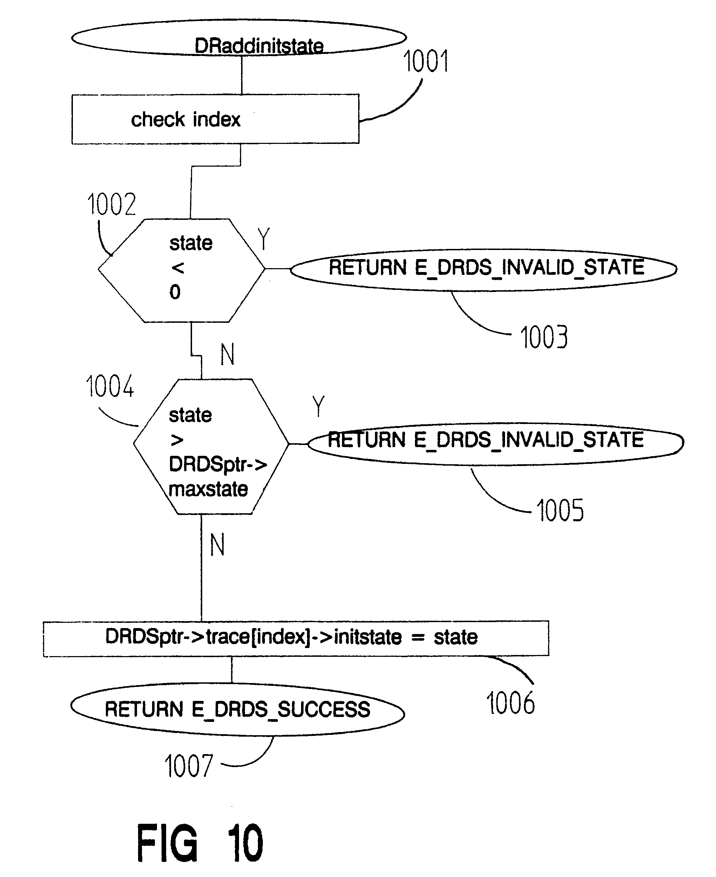

Figure 10 shows a flow diagram for the DRaddinitstate function. DRaddinitstate adds an initial state for a trace in a DRDS. In block 1001, the index is checked to see if it is valid. If it is not, an error is returned to the calling procedure. In decisions 1002 and 1004, the state is checked to see if it is less than zero or greater than the maximum allowable state. If it is, in blocks 1003 and 1005, a negative error value is returned to the calling procedure. In block 1006, the state is assigned to DRDSptr->trace[index]->initstate. In block 1004, SUCCESS is returned to the calling procedure.

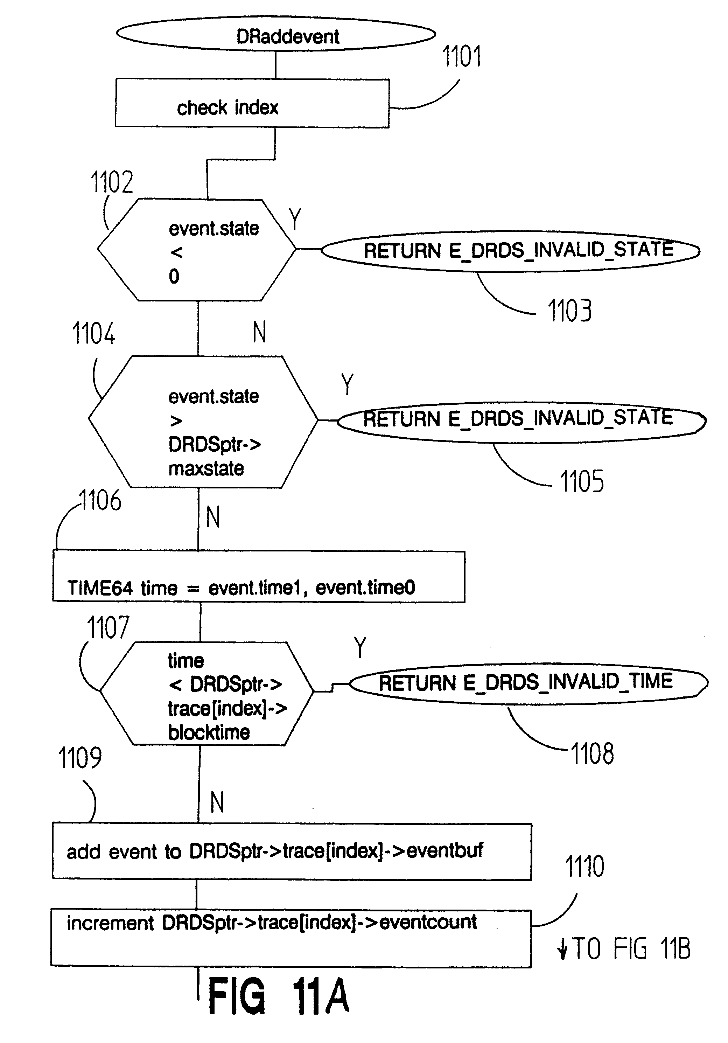

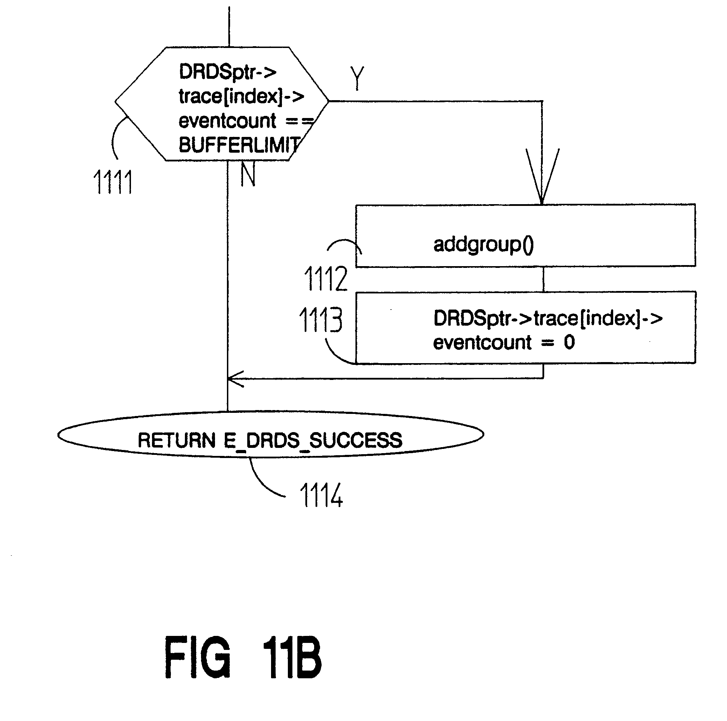

Figure 11 shows a flow diagram for the DRaddevent function. DRaddevent adds an event for a trace in a DRDS. In block 1101, the index is checked to see if it is valid. If it is not, an error is returned to the calling procedure. In decisions 1102 and 1104, the state is checked to see if it is less than zero or greater than the maximum allowable state. If it is, in block 1103 and 1105, a negative error value is returned to the calling procedure. In block 1106, the 32 bit time values in the event are converted to a 64 bit time value. In decision 1107 time is checked to see if it is decreasing. If so, in block 1108, a negative error value is returned. In blocks 1109 and 1110, the event is added to the event buffer for this trace and the eventcount is incremented. In blocks 1111, 1112 and 1113 the eventcount is checked to see if it equals the buffer limit. If so the addgroup subroutine is called and the eventcount is reset to 0. In block 1114, SUCCESS is returned to the calling procedure.

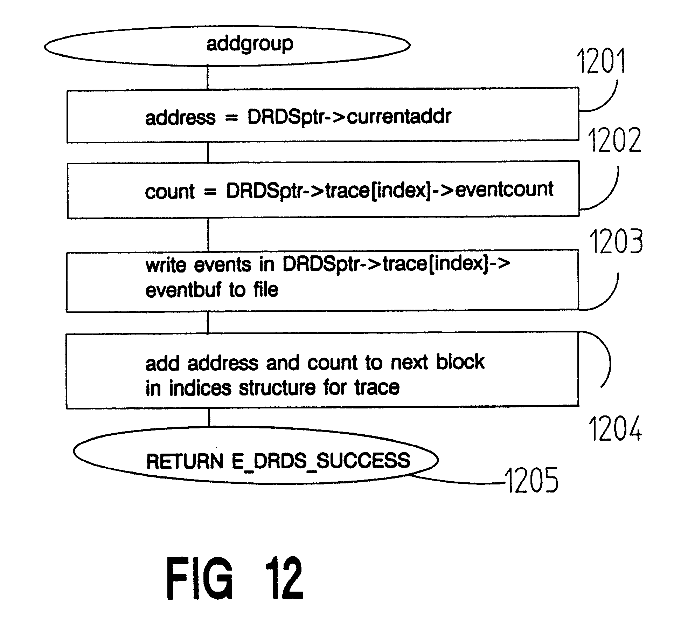

Figure 12 shows a flow diagram for the addgroup subroutine. Addgroup writes a group of events for a trace to a DRDS file. In block 1201, the current address is stored. In block 1202, the count of events is stored. In block 1203, the events are written to the file. In block 1204, the address and count are stored in the current LVL1 node (see Table 1) in the B+ tree indices structure and the maximum event time is stored in the current LVL1, LVL2 and LVL3 nodes. The current node pointers are incremented to point to the next node. In block 1205, SUCCESS is returned to the calling procedure.

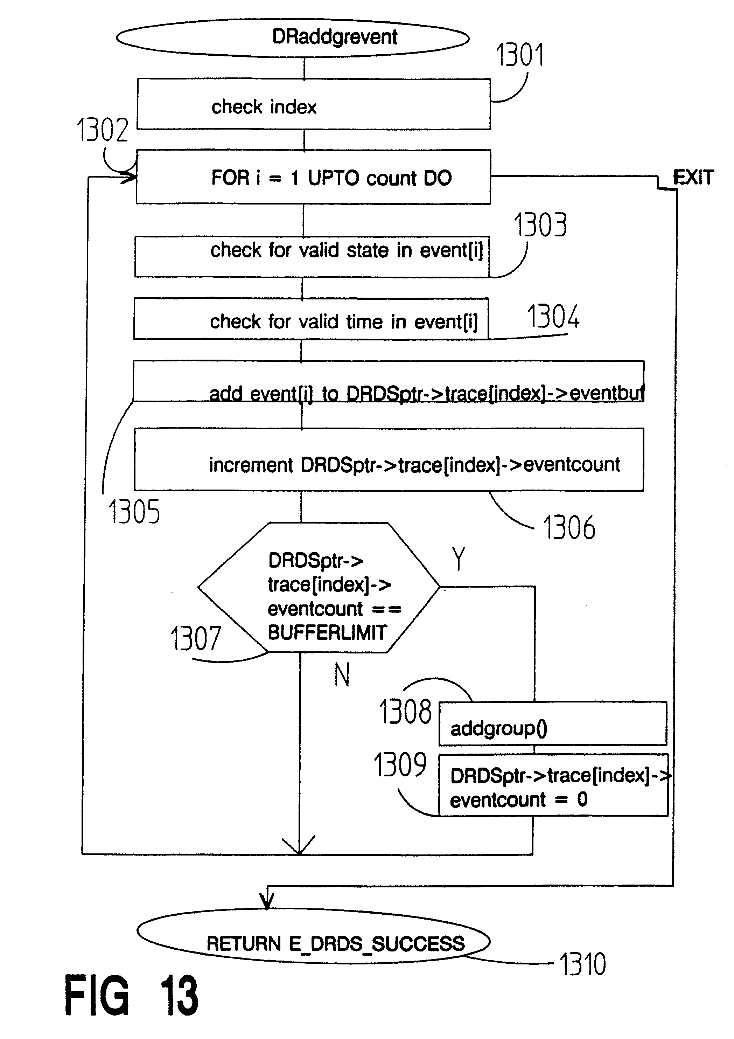

Figure 13 shows a flow diagram for the DRaddgrevent function. DRaddgrevent adds a group of events to a trace in a DRDS. In block 1301, the index is checked to see if it is valid. If it is not, an error is returned to the calling procedure. Blocks 1302 through 1309 are executed for each event that is to be added for this trace. In block 1303, the state is checked to see if it is valid. If it is not, a negative error value is returned to the calling procedure. In block 1304, time is checked to see if it is decreasing. If so, a negative error value is returned. In blocks 1305 and 1306 the event is added to the event buffer for this trace and the eventcount is incremented. In blocks 1307, 1308 and 1309 the eventcount is checked to see if it equals the buffer limit. If so, the addgroup subroutine is called and the eventcount is reset to 0. After all events have been processed, SUCCESS is returned to the calling procedure in block 1310.

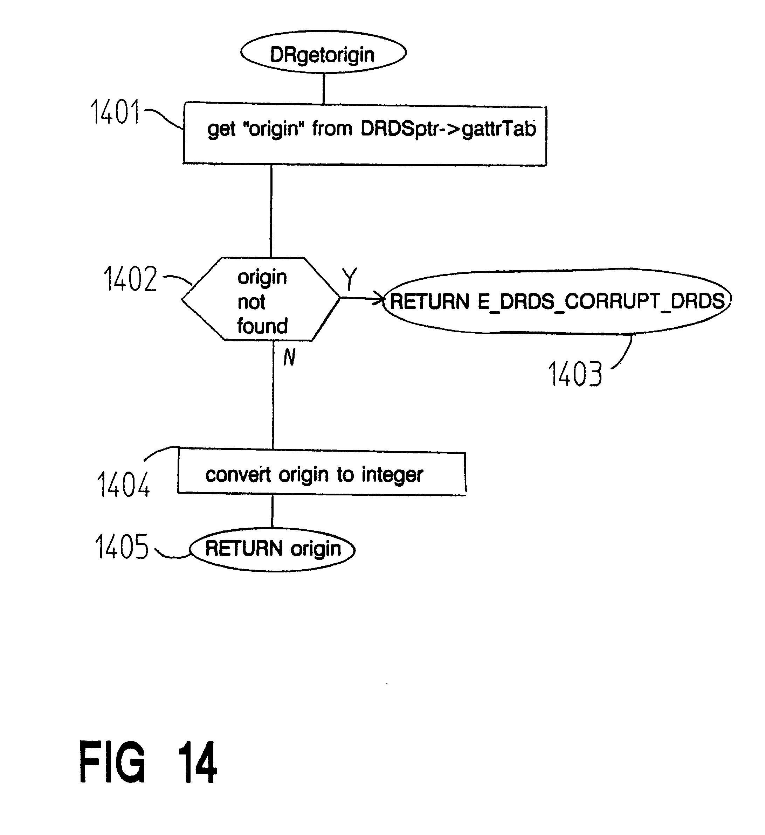

Figure 14 shows a flow diagram for the DRgetorigin function. DRgetorigin returns the origin for the set of data in a DRDS. In block 1401 the origin is retrieved from the global attribute table, DRDSptr->gattrTab. If the origin is not found in block 1402; a negative error value is returned in block 1403. In block 1404, the origin is converted to an integer value and that value is returned in block 1405.

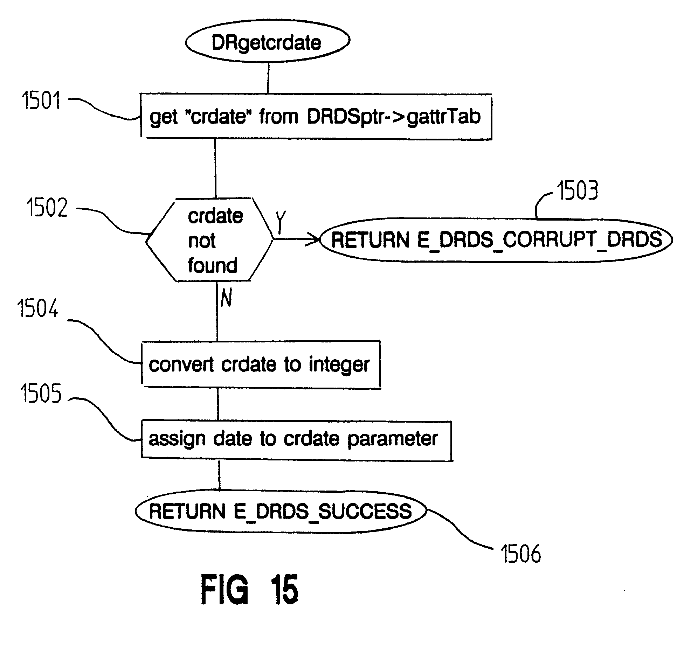

Figure 15 shows a flow diagram for the DRgetcrdate function. DRgetcrdate returns the creation date for the set of data in a DRDS. In block 1501 the creation date is retrieved from the global attribute table, DRDSptr->gattrTab. If crdate is not found in block 1502, a negative error value is returned in block 1503. In block 1504, the creation date is converted to an integer value and that value is assigned to the crdate parameter in block 1505. In block 1506, SUCCESS is returned to the calling procedure.

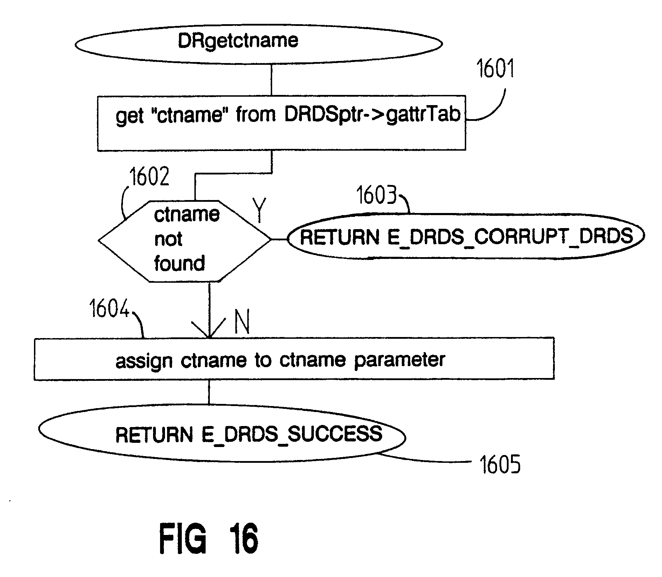

Figure 16 shows a flow diagram for the DRgetctname function. DRgetctname returns the circuit name for a set of data in a DRDS. In block 1601 the circuit name is retrieved from the global attribute table, DRDSptr->gattrTab. If ctname is not found in block 1602, a negative error value is returned in block 1603. In block 1604, the circuit name is assigned to the ctname parameter. In block 1606, SUCCESS is returned to the calling procedure.

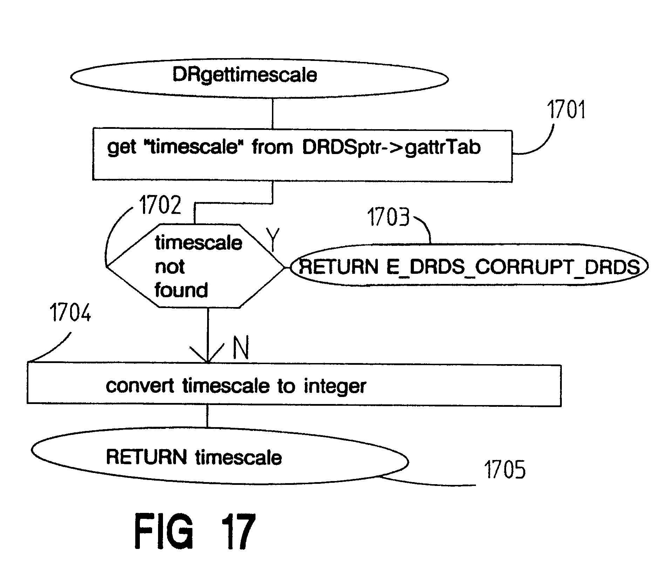

Figure 17 shows a flow diagram for the DRgettimescale function. DRgettimescale returns the time scale (resolution for all time values) for the data in a DRDS. In block 1701 the time scale is retrieved from the global attribute table, DRDSptr->gattrTab. If the time scale is not found in block 1702, a negative error value is returned in block 1703. In block 1704, the time scale is converted to an integer. In block 1706, the time scale is returned to the calling procedure.

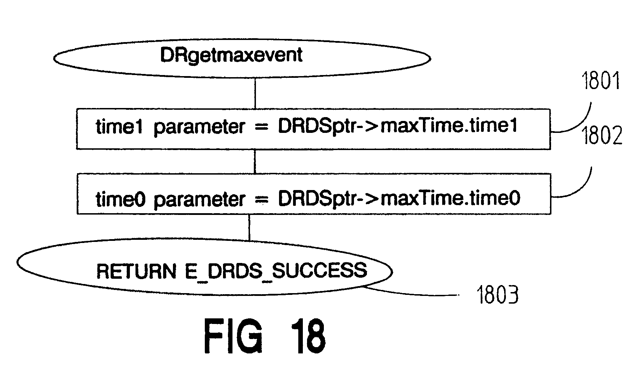

Figure 18 shows a flow diagram for the DRgetmaxevent function. DRgetmaxevent returns the time of the maximum event in a DRDS. In block 1801, maxevent time1 is assigned to the time1 parameter. In block 1802, maxevent time0 is assigned to the time0 parameter. Then in block 1803, SUCCESS is returned to the calling procedure.

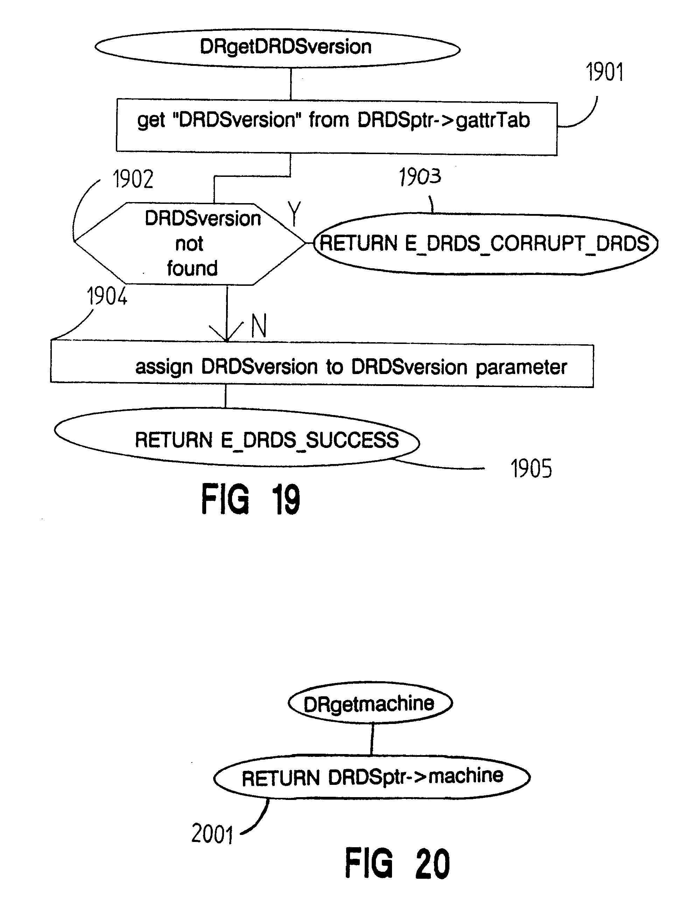

Figure 19 shows a flow diagram for the DRgetDRDSversion function. DRgetDRDSversion returns the version number of the DRDS software that produced this DRDS. In block 1901 the DRDSversion is retrieved from the global attribute table, DRDSptr->gattrTab. If the DRDSversion is not found in block 1902, a negative error value is returned in block 1903. In block 1904, the DRDSversion string is assigned to the version parameter. SUCCESS is returned to the calling procedure in block 1905.

Figure 20 shows a flow diagram for the DRgetmachine function. DRgetmachine returns the machine identifier (either HP9000S300 or I80386) of the machine that produced this DRDS. In block 2001, the DRDSptr->machine symbolic constant is returned to the calling procedure.

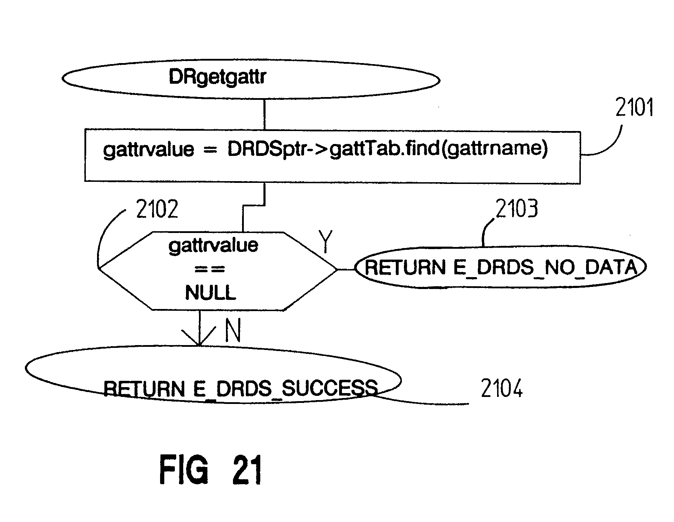

Figure 21 shows a flow diagram for the DRgetgattr function. DRgetgattr returns the global attribute (gattr) value for the gattr name passed in. In block 2101 the gattr is retrieved from the global attribute table, DRDSptr->gattrTab and assigned to the value parameter. If the gattr value is NULL, in block 2102, a value signifying "no data" is returned in block 2103. In block 2104, SUCCESS is returned to the calling procedure.

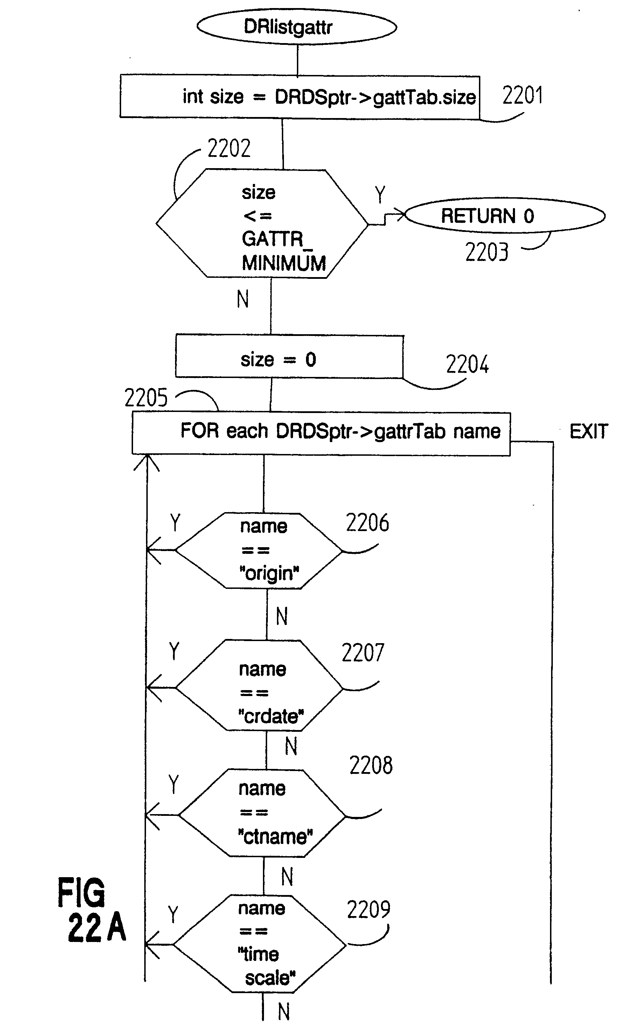

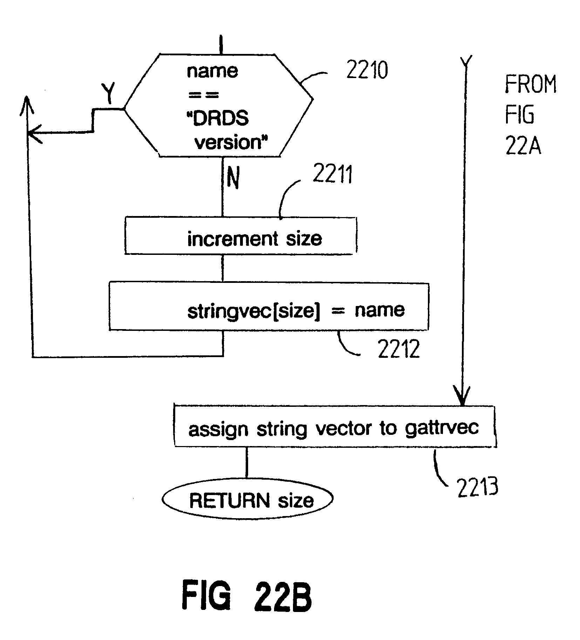

Figure 22 shows a flow diagram for the DRlistgattr function. DRlistgattr returns the names of all global attributes (gattrs) in the DRDS. In block 2201 the total number of gattrs is retrieved from the global attribute table, DRDSptr->gattrTab, and assigned to a variable (size). If size is less than or equal to the minimum size of the global attribute table, in block 2202, zero is returned to the calling procedure in block 2203. If there are more than the minimum number of attributes, in block 2204, the size is reset to zero. In blocks 2205 through 2212, each name is retrieved in turn from the global attribute table. If the name is one of the default names, it is ignored. If it is not, it is added to a string vector and the size variable is incremented. When all of the names have been retrieved and processed, the string vector is assigned to the gattrvec parameter in block 2213 and in block 2214 the size is returned to the calling procedure.

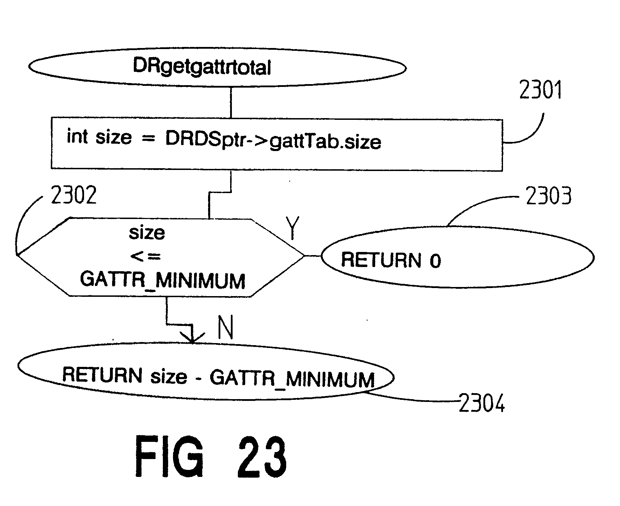

Figure 23 shows a flow diagram for the DRgetgattrtotal function. DRgetgattrtotal returns the total number of global attributes (gattrs) in a DRDS. In block 2301 the number of gattrs is retrieved from the global attribute table, DRDSptr->gattrTab and assigned to a variable (size). If the number of gattrs is less than or equal to the minimum number of global attributes, the number zero is returned to the calling procedure. In block 2304, the actual number of user-created attributes is returned to the calling procedure.

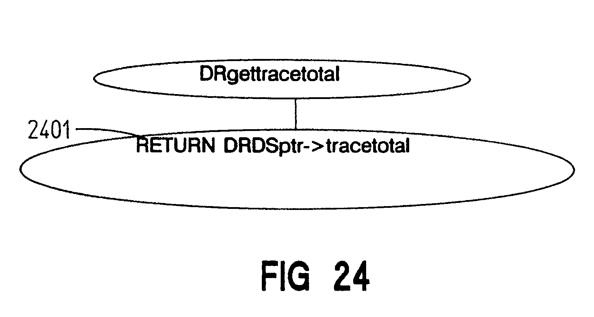

Figure 24 shows a flow diagram for the DRgettracetotal function. DRgettracetotal returns the total number of traces that have been added to a DRDS. In block 2401, the trace total is returned to the calling procedure.

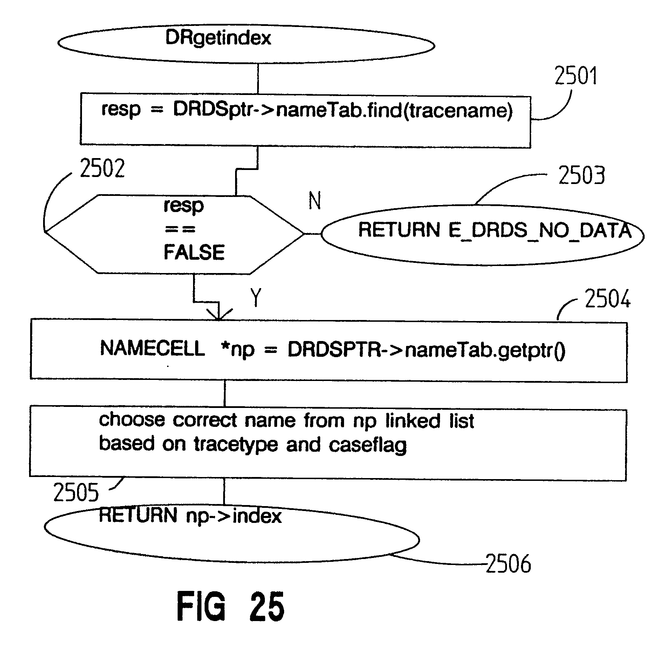

Figure 25 shows a flow diagram for the DRgetindex function. DRgetindex returns the index for a trace in a DRDS. In block 2501 the trace name is searched for in the trace name table, DRDSptr->nameTab. In blocks 2502 and 2503, if the trace name is not found, a negative error number is returned. In block 2504, the linked list of NAMECELLs associated with this name is assigned to the NAMECELL pointer np. In block 2505, the correct NAMECELL is selected from the linked list based on the trace type parameter and the case flag parameter. In block 2506, the index is returned to the calling procedure.

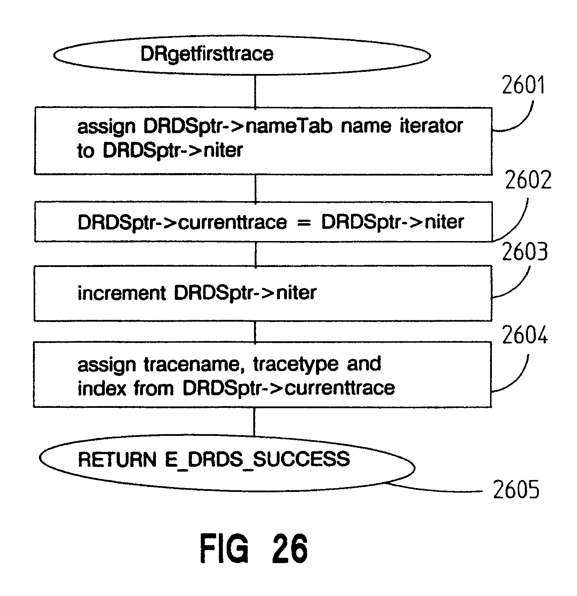

Figure 26 shows a flow diagram for the DRgetfirsttrace function. DRgetfirsttrace returns the trace name, trace type and trace index for the first trace in a DRDS. In block 2601 and 2602 a name table iterator (see Table 1) is assigned to DRDSptr->niter and DRDSptr->currenttrace. In block 2603 the name iterator is incremented. In block 2604 the trace name, trace type and trace index are assigned from DRDSptr->currenttrace. In block 2605, SUCCESS is returned to the calling procedure.

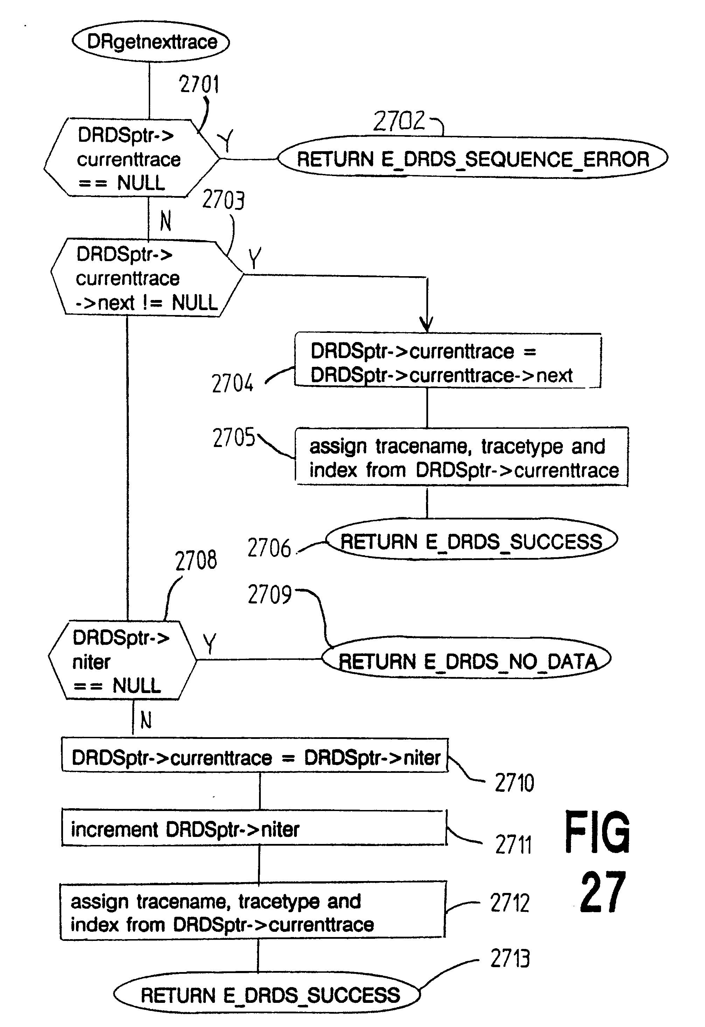

Figure 27 shows a flow diagram for the DRgetnexttrace function. DRgetnexttrace returns the trace name, trace type and trace index for the next trace in a DRDS. In decision 2701 the DRDSptr->currenttrace NAMECELL pointer is tested to see if it is NULL. If so, in block 2702, a negative error value is returned to the calling procedure. In decision 2703, currenttrace->next is tested to see if it is NULL. If it is not NULL, in blocks 2704 through 2709, currenttrace is incremented, trace name, trace type and trace index are assigned from DRDSptr->currrenttrace and SUCCESS is returned. If currenttrace->next is NULL, in decision 2708, the NAMECELL iterator is tested to see if it is NULL. If it is, in block 2709, NO_DATA is returned to the calling procedure. If the NAMECELL iterator is not NULL, then in blocks 2710 through 2712, currenttrace is assigned the DRDSptr->niter. DRDSptr->niter is incremented and trace name, trace type and trace index are assigned from DRDSptr->currrenttrace. In block 2713, SUCCESS is returned to the calling procedure.

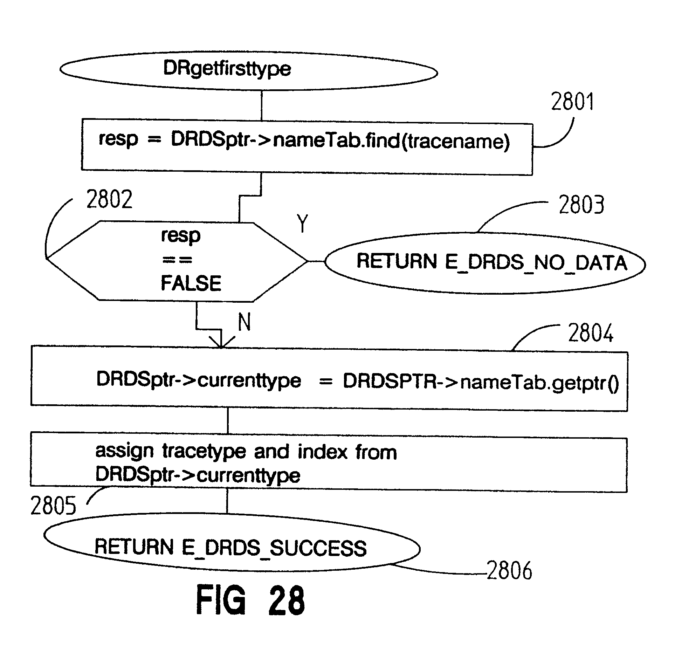

Figure 28 shows a flow diagram for the DRgetfirsttype function. DRgetfirsttype returns the type and index for a trace in a DRDS where there are multiple traces distinguished by type. In block 2801 the trace name is searched for in the trace name table, DRDSptr->nameTab. In blocks 2802 and 2803, if the trace name is not found, a negative error message number is returned. In block 2804, the linked list of NAMECELLs associated with this name is assigned to DRDSptr->currenttype. In block 2805, the trace type and trace index are assigned to the trace type and index parameters from DRDSptr->currenttype. In block 2806, SUCCESS is returned to the calling procedure.

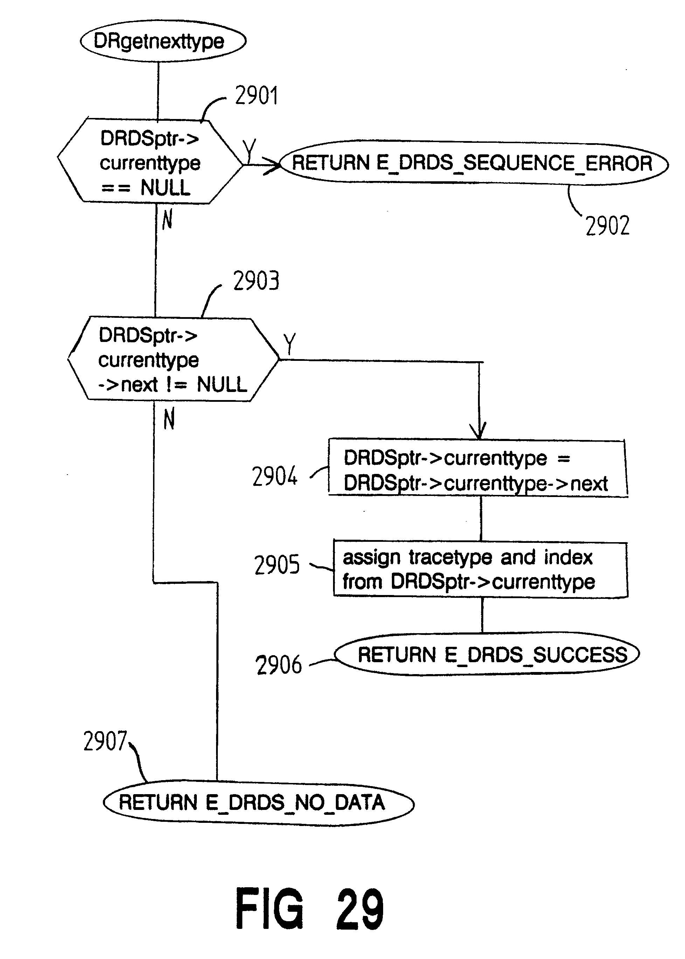

Figure 29 shows a flow diagram for the DRgetnexttype function. DRgetnexttype returns the trace type and trace index for a trace in a DRDS where there are multiple traces with the same name distinguished by type. In decision 2901, DRDSptr->currenttype is tested to see if it is NULL. If it is, in block 2902, a negative error value is returned to the calling procedure. In decision 2903 currenttype->next is tested to see if it is not NULL. If it is not, then in blocks 2904 through 2906, currenttype is incremented, trace type and trace index are assigned from currenttype and SUCCESS is returned to the calling procedure. If currenttype->next is NULL then in block 2907, NO_DATA is returned to the calling procedure.

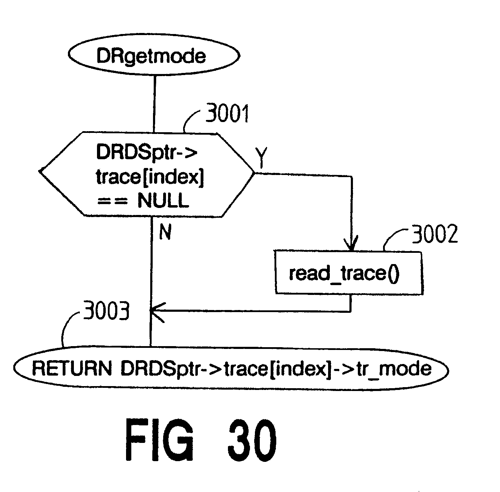

Figure 30 shows a flow diagram for the DRgetmode function. DRgetmode returns the trace mode (either YES_EVENTS or NO_EVENTS) for a trace in a DRDS. In decision 3001, DRDSptr->trace[index] is tested to see if it is NULL. If it is, the read_trace subroutine is called in block 3002. In block 3003, the DRDSptr->trace [index]->tr_mode is returned to the calling function.

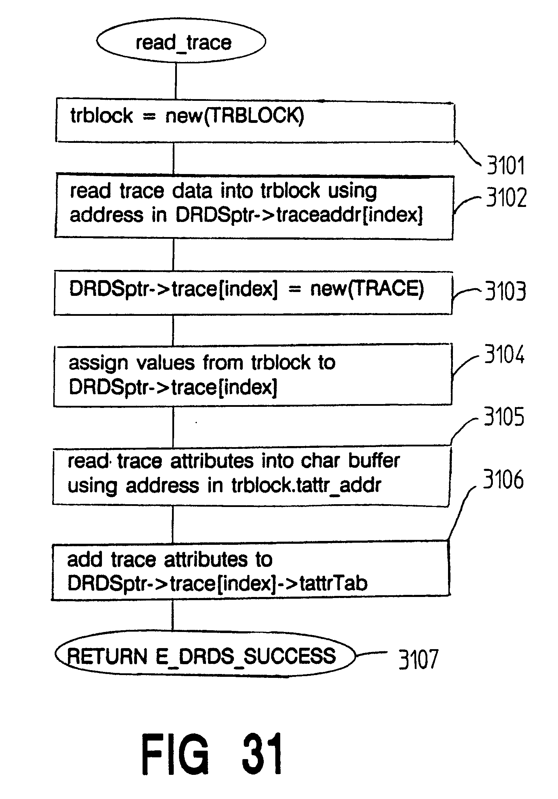

Figure 31 shows a flow diagram for the read_trace subroutine. Read_trace reads all the data for a trace from the DRDS file and places that data in the TRACE structure (see Table 1). In blocks 3101 and 3102, a new TRBLOCK is created and all the global data for this trace is read into it using the address stored in the trace address array, DRDSptr->traceaddr[index]. In block 3103 and 3104 a new TRACE structure is created in DRDSptr->trace[index] and the values from the TRBLOCK are assigned to it. In blocks 3105 and 3106 trace attributes are read into a character buffer using the address in trblock.tattr_addr and are assigned to DRDSptr->trace[index]->tattrTab, the trace attribute hash table. In block 3107, SUCCESS is returned to the calling procedure.

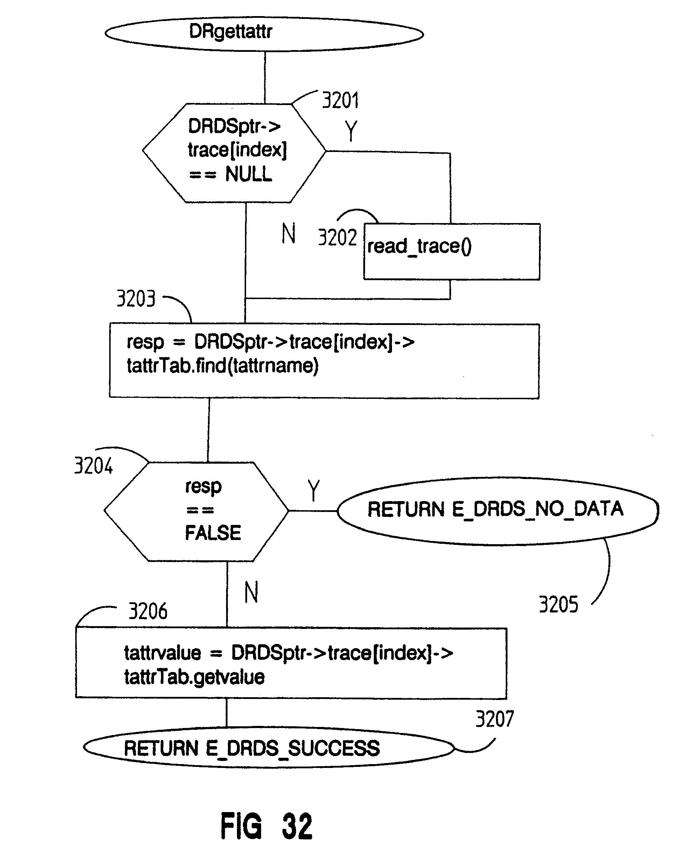

Figure 32 shows a flow diagram for the DRgettattr function. DRgettattr returns a trace attribute (tattr) value, given a trace attribute name. In decision 3201, DRDSptr->trace[index] is tested to see if it is NULL. If it is, the read_trace subroutine is called in block 3202. In block 3203, the trace attribute name is searched for in the trace attribute table, DRDSptr->trace[index]->tattrTab. In blocks 3204 and 3205, if the trace attribute name is not found in the table, NO_DATA is returned to the calling procedure. Otherwise, in block 3206, the trace attribute value is assigned to the tattrvalue parameter from the trace attribute table. In block 3207, SUCCESS is returned to the calling procedure.

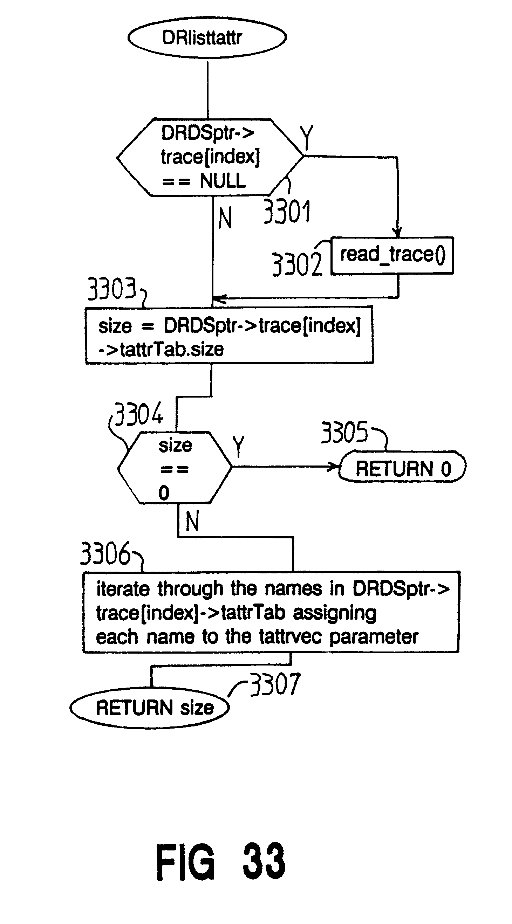

Figure 33 shows a flow diagram for the DRlisttattr function. DRlisttattr returns a list of trace attribute names for a trace in a DRDS and returns the number of trace attributes in the list. In decision 3301, DRDSptr-> trace[index] is tested to see if it is NULL. If it is, the read_trace subroutine is called in block 3302. In block 3303, the size of the trace attribute name table is retrieved. In blocks 3304 and 3305, if the size of the trace attribute table equals zero, NO_DATA is returned to the calling procedure. Otherwise, in block 3306, each name in the trace attribute table is assigned to the tattrvec parameter. In block 3307, the size is returned to the calling procedure.

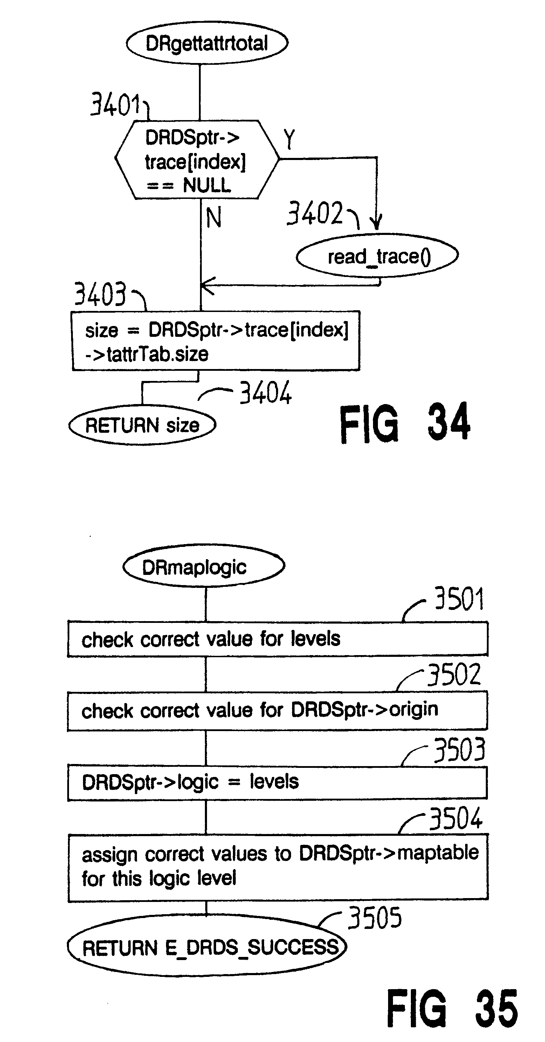

Figure 34 shows a flow diagram for the DRgettattrtotal function. DRgettattrtotal returns the total number of trace attributes for a trace in a DRDS. In decision 3401, DRDSptr->trace [index] is tested to see if it is NULL. If it is, the read_trace subroutine is called in block 3402. In block 3403, the size of the trace attribute name table is retrieved. In block 3404 the size is returned to the calling procedure.

Figure 35 shows a flow diagram for the DRmaplogic function. DRmaplogic sets the logic levels value in the DRDS structure so that when events are retrieved from the DRDS they will be mapped to the correct logic level (either the set of 5 logic states or the set of 7 logic states). In block 3501, the levels parameter is check for correctness. If it is incorrect an error number is returned to the calling procedure. In block 3502, DRDSptr->origin is checked for correctness. If it is incorrect, a negative error value is returned to the calling procedure. (If there is an incorrect origin, levels cannot be mapped correctly.) In block 3503, the levels parameter is assigned to DRDSptr->logic. In block 3504, the correct values for the DRDSptr->maptable are assigned based on this origin and this logic level. In block 3505, SUCCESS is returned to the calling procedure.

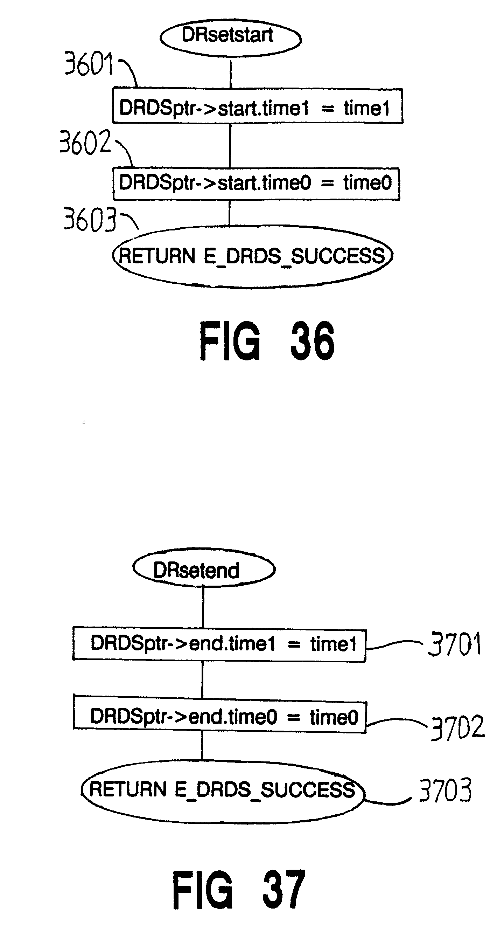

Figure 36 shows a flow diagram for the DRsetstart function. DRsetstart sets the start time value in the DRDS structure so that when events are retrieved from the DRDS they will be retrieved beginning at the start time. In block 3601, the most significant word in the 64 bit start time value is set by the time1 parameter. In block 3602, the least significant word in the 64 bit start time value is set by the time0 parameter. In block 3603, SUCCESS is returned to the calling procedure.

Figure 37 shows a flow diagram for the DRsetend function. DRsetend sets the end time value in the DRDS structure so that when events are retrieved fron the DRDS they will be retrieved up to and including the end time. In block 3701, the most significant word in the 64 bit end time value is set by the time1 parameter. In block 3702, the least significant word in the 64 bit end time value is set by the time0 parameter. In block 3703, SUCCESS is returned to the calling procedure.

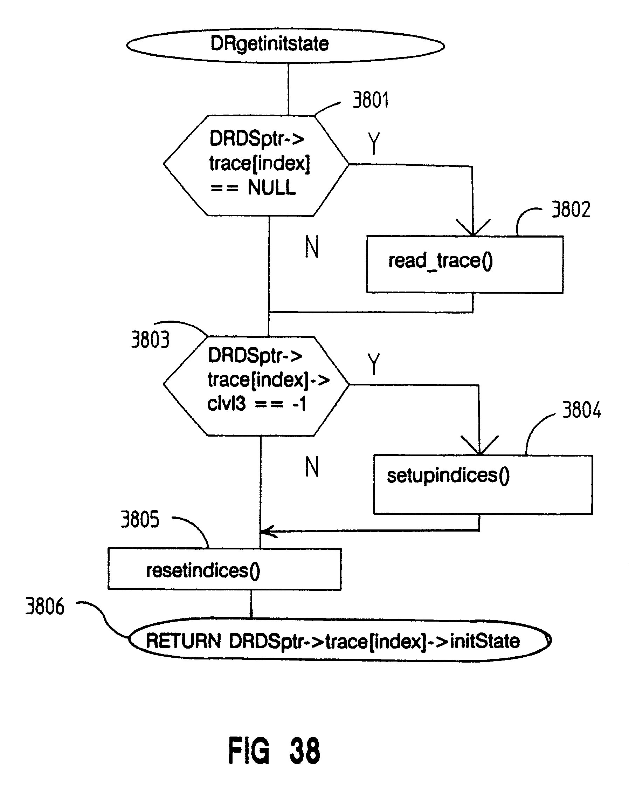

Figure 38 shows a flow diagram for the DRgetinitstate function. DRgetinitstate returns the initial state for a trace in a DRDS. In decision 3801, DRDSptr->trace[index] is tested to see if it is NULL. If it is, the read_trace subroutine is called in block 3802. In decision 3803, DRDSptr->trace[index]->clvl3 is tested to see if it is equal to -1. If it is, the setupindices subroutine is called in block 3804. The resetindices subroutine is called in block 3805. Since resetindices is always called in this function, it allows the application program to reset the start and end times by simply retrieving the initial state. In block 3806, the initial state for this trace is returned to the calling procedure.

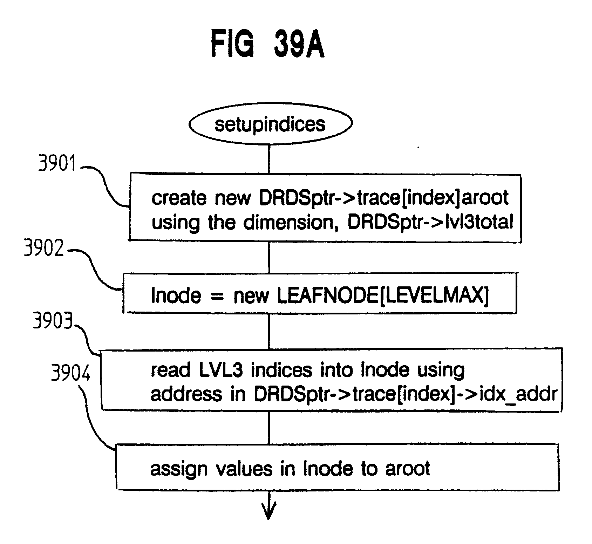

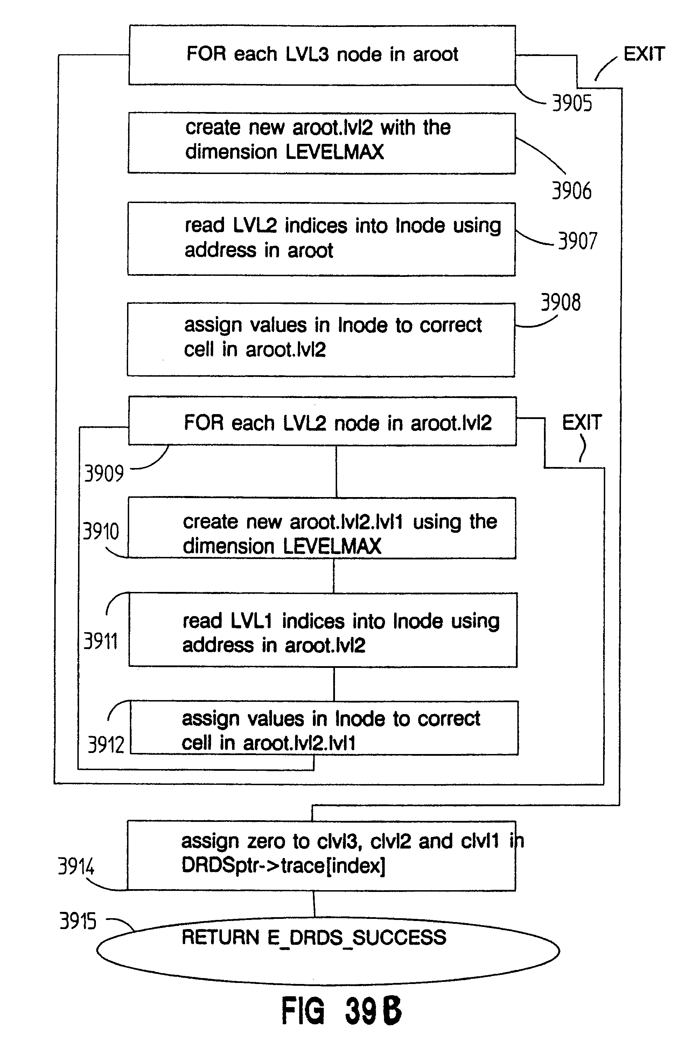

Figure 39 shows a flow diagram for the setupindices subroutine. Setupindices reads from the DRDS file the values for the B+ tree indices structure for this trace and builds this structure. The B+ tree indices structure supports both sequential or random access to the set of events for this trace. In block 3901, a new array of type LVL3 with dimension DRDSptr->lvl3total is created in DRDSptr->trace[index]->aroot. In block 3902, a new LEAFNODE array with dimension LEVELMAX is created and assigned to Inode. In block 3903, the LVL3 indices for this trace are read into Inode using the address, DRDSptr->trace[index]->idx_addr, and the size, DRDSptr-> trace[index]->lvl3total. In block 3904, the values from Inode are assigned to aroot. In blocks 3905 through 3912, for each LVL3 node in aroot: a new LVL2 array with dimension LEVELMAX is created and assigned to the appropriate LVL2 node in this LVL3.lvl2: the LVL2 indices are read into Inode using the address in the LVL3 node; the values from the Inode are assigned to the LVL2 array, and then for each node in the LVL2 array: a new LVL1 array is created with dimension LEVELMAX and assigned to the appropriate LVL1 node in LVL2.lvl1, the LVL1 indices are read into Inode using the address in the LVL2 node and those values are assigned to the LVL1 array. When this is complete for all LVL3 nodes in aroot, in block 3914, zero is assigned to clvl3, clvl2 and clvl1 in DRDSptr->trace[index] to have them point to the very first block of events for this trace. In block 3915, SUCCESS is returned to the calling procedure.

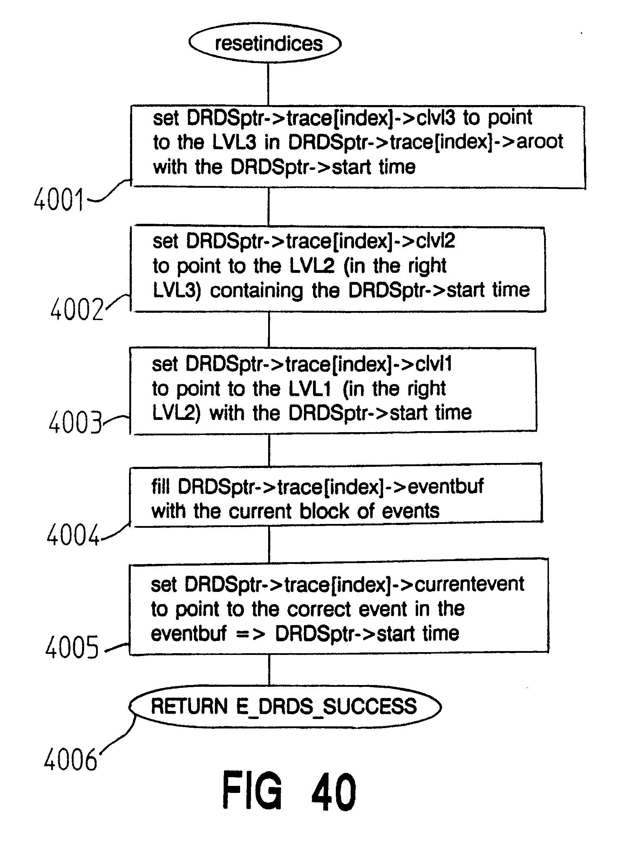

Figure 40 shows a flow diagram for the resetindices subroutine. Resetindices resets the values of the DRDSptr->trace[index]->clvl3, DRDSptr->trace[index]->clvl2 and DRDSptr->trace[index]->clvl1 index pointers to point to the appropriate block of events for this trace according to the start time in DRDSptr->start. In block 4001, DRDSptr->trace[index]->clvl3 is set to point to the LVL3 node in DRDSptr->trace[index]->aroot that contains the start time. In block 4002, DRDSptr->trace[index]->clvl2 is set to point to the LVL2 node (in the current LVL3 node) that contains the start time. In block 4003, DRDSptr->trace[index]->clvl1 is set to point to the LVL1 node (in the current LVL2 node) that contains the start time. In block 4004, the event buffer for this trace, DRDSptr-> trace[index]->eventbuf, is filled with the current block of events. In block 4005, the current event pointer (DRDSptr->trace[index]->currentevent) for this trace, is set to point to the event in the event buffer with time equal to or greater than the start time. In block 4006, SUCCESS is returned to the calling procedure.

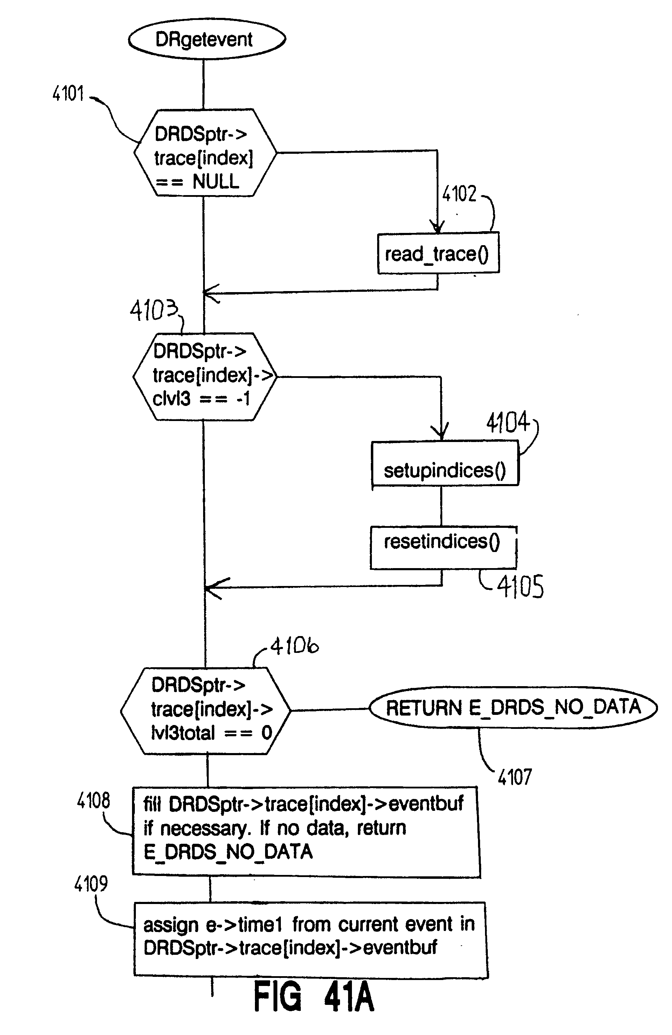

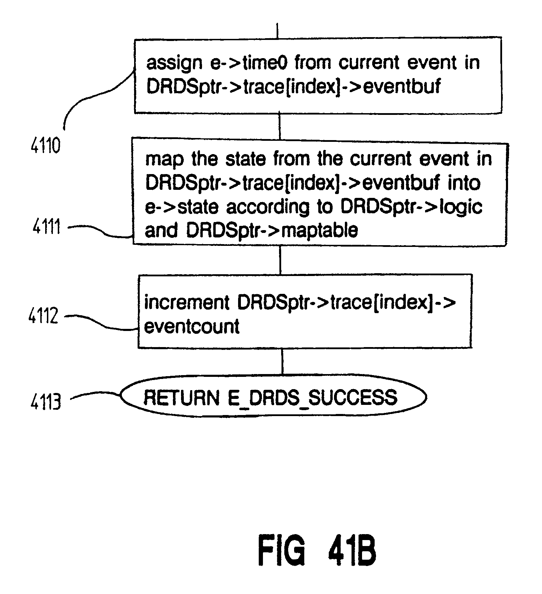

Figure 41 shows a flow diagram for the DRgetevent function. DRgetevent returns the next event for a trace in a DRDS. In decision 4101, DRDSptr->trace[index] is tested to see if it is NULL. If it is, the read_trace subroutine is called in block 4102. In decision 4103, DRDSptr->trace[index]->clvl3 is tested to see if it is equal to -1. If it is, the setupindices subroutine is called in block 4104 and the resetindices subroutine is called in block 4105. In block 4106, the lvl3total for this trace is tested to see if it is zero. If it is, NO_DATA is returned to the calling procedure. In block 4108, the event buffer for this trace is filled with the current block of events, if necessary. If there is no data, NO_DATA is returned to the calling procedure. In blocks 4109, 4110 and 4111, the time for the current event in the event buffer is assigned to the event parameter and the state for the current event is mapped according to DRDSptr->maptable and assigned to the event parameter. In block 4112, DRDSptr->trace[index]->eventcount, the current event count, is incremented and in block 4113, SUCCESS is returned to the calling procedure.

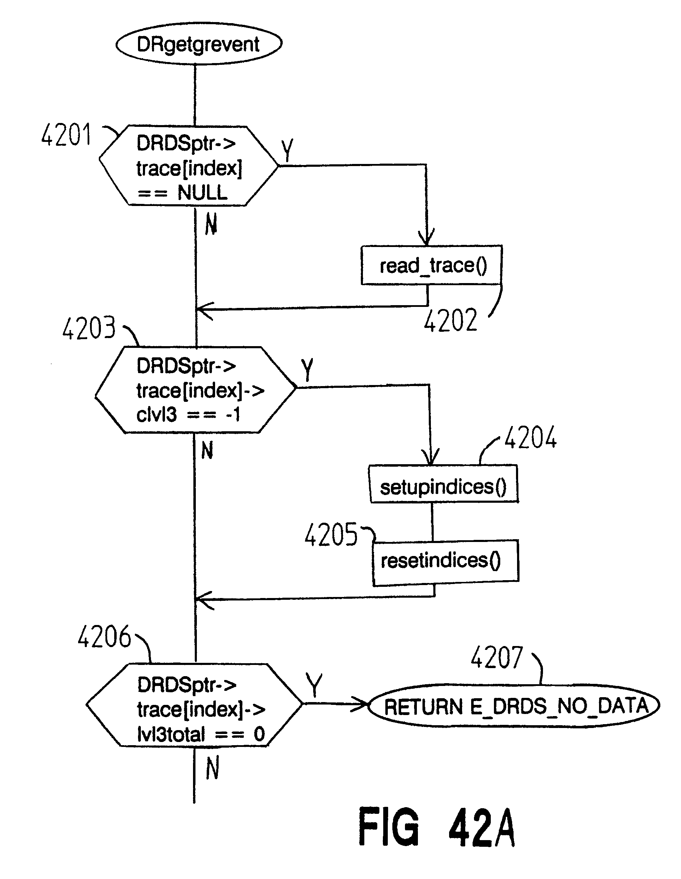

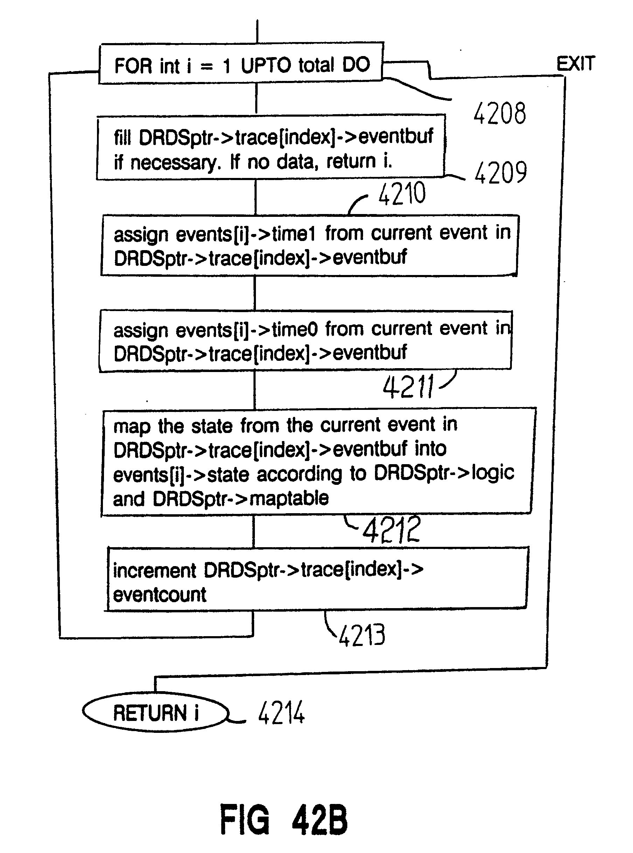

Figure 42 shows a flow diagram for the DRgetgrevent function. DRgetgrevent returns the next group of events for a trace in a DRDS. In decision 4201, DRDSptr->trace[index] is tested to see if it is NULL. If it is, the read_trace subroutine is called in block 4202. In decision 4203, DRDSptr->trace[index]->clvl3 is tested to see if it is equal to -1. If it is, the setupindices subroutine is called in block 4204 and the resetindices subroutine is called in block 4205. In block 4206, the lvl3total for this trace is tested to see if it is zero. If it is, NO_DATA is returned to the calling procedure. The "total" parameter contains the number of events requested by the calling procedure. Blocks 4208 through 4213 are executed a "total" number of times, once for each event. In block 4209, the event buffer is tested to see if it needs to be filled, if so, it is filled with the current block of events. If there is no data, the number of events already processed is returned to the calling procedure. In blocks 4210, 4211 and 4212, the time for the current event in the event buffer is assigned to the event vector parameter and the state for the current event is mapped according to DRDSptr->maptable and assigned to the event vector parameter. In block 4213 the current event count in DRDSptr->trace[index]-> eventcount is incremented. When the preceding blocks have been executed for each requested event, the number of events actually processed is returned to the calling procedure in block 4214.

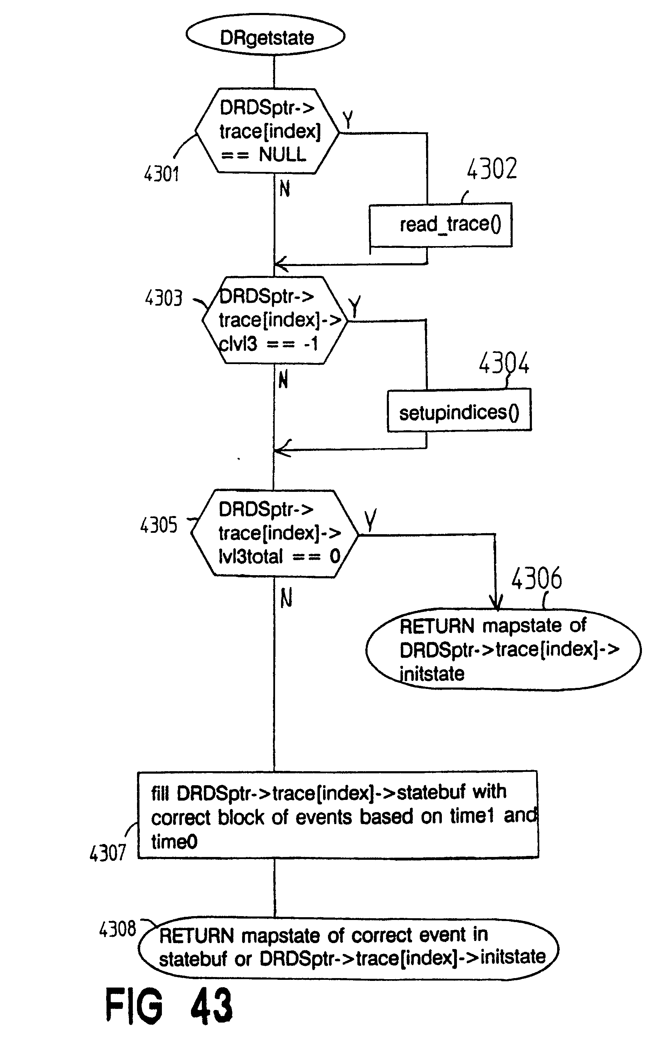

Figure 43 shows a flow diagram for the DRgetstate function. DRgetstate returns the state for a trace in a DRDS at a particular time. If there is an event at exactly the requested time, its state may be included or excluded according to the mode parameter. In decision 4301, DRDSptr->trace[index] is tested to see if it is NULL. If it is, the read__trace subroutine is called in block 4302. In decision 4303, DRDSptr->trace[index]->clvl3 is tested to see if it is equal to -1. If it is, the setupindices subroutine is called in block 4304. In block 4305, the lvl3total for this trace is tested to see if it is zero. If it is, the initial state is mapped according to DRDsptr->maptable and is returned to the calling procedure. If there is data, in block 4307, the state buffer for this trace, DRDSptr->trace[index]->statebuf, is filled with the block of events that contains the requested time. If the requested time precedes the first event in the state buffer, then the initial state is mapped according to DRDsptr->maptable and is returned to the calling procedure. Otherwise the state from the correct event is mapped according to DRDsptr->maptable and is returned to the calling procedure.

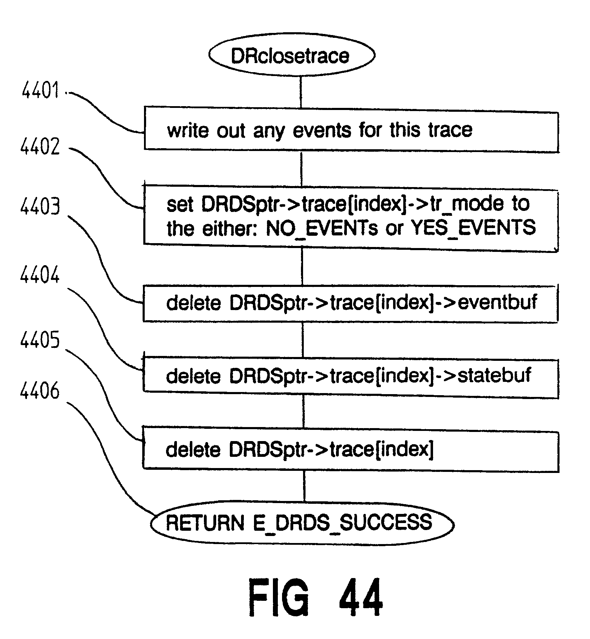

Figure 44 shows a flow diagram for the DRclosetrace function. DRclosetrace closes a trace and deletes all data structures associated with it. In block 4401, if the mode is CREATE, any events associated with this trace are written out to the DRDS file. In block 4402, if the mode is CREATE, the trace mode is set to either YES__EVENTS or NO__EVENTS. In block 4403 the trace event buffer is deleted. In block 4404, the trace state buffer is deleted. In block 4405, the TRACE structure for this trace is deleted. In block 4406, SUCCESS is returned to the calling procedure.

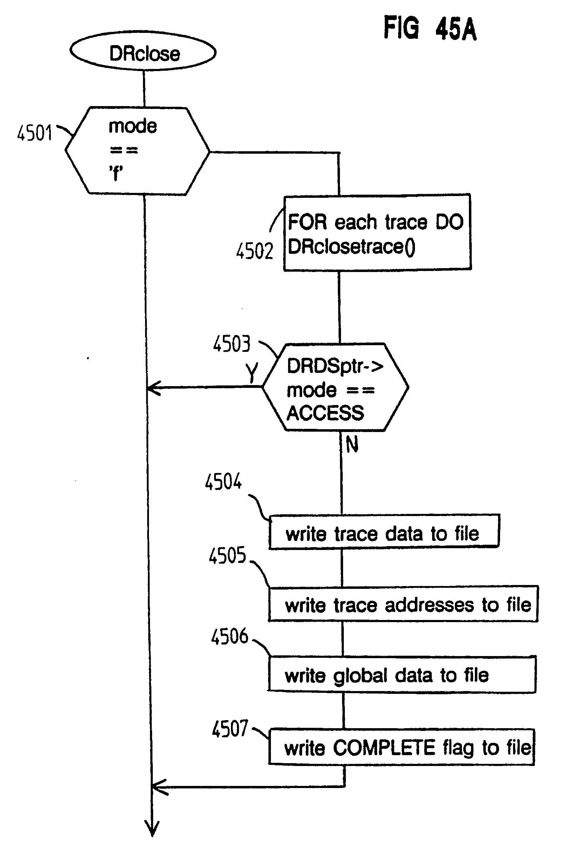

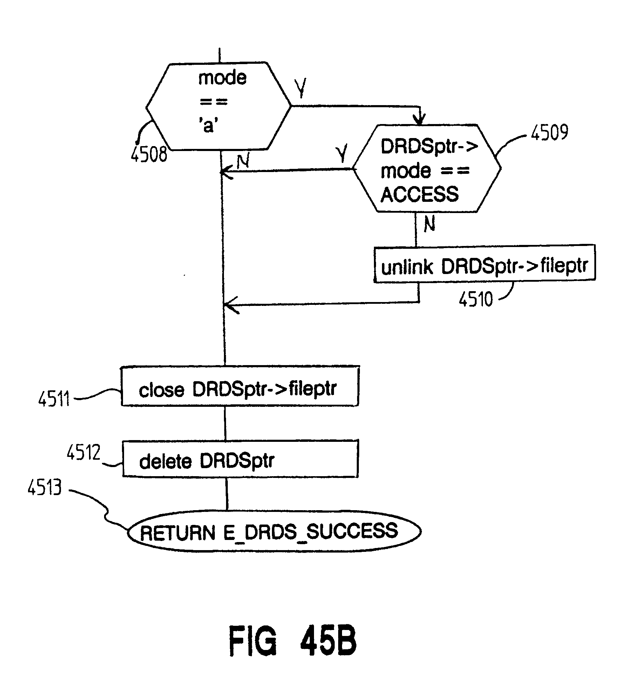

Figure 45 shows a flow diagram for the DRclose function. DRclose ends a DRDS session, closes the DRDS file and deletes all data structures associated with this DRDS. In decision 4501, the mode is tested to see if it is 'f', "finish". If it is, the DRclosetrace function is called for each trace. In decision 4503, the DRDS mode is tested to see if it is ACCESS, if it is not, blocks 4504 through 4507 are executed. In block 4504, all trace data is written to the DRDS file. In block 4505, all trace addresses are written to the DRDS file. In block 4506, all global data is written to the DRDS file. In block 4507, the FLAG structure is created, assigned the COMPLETE value and the address for the global data and then it is written to the zero location of the DRDS file. In decision 4508, the mode is tested to see if it is "a" (abort). If it is, blocks 4509 and 4510 are executed. In these blocks, the DRDS mode is tested to see if it is ACCESS. If it is not, then the DRDS file pointer is unlinked. In block 4511, the DRDS file is closed. In block 4512, the DRDS structure is deleted and in block 4513, SUCCESS is returned to the calling procedure.

## Table 1

```
EVENT structure
{
        short    state
        long     time1            // most significant word
        long     time0            // least significant work
}


TIME64 structure
{
        long time1
        long time0
}
TIME64 functions
{
        A TIME64 supports these functions:
        +, -, /, *, <, >, <=, >=, !=, ==
}


LVL1 structure
{
        TIME64   maxtime
        long     diskaddr
        int      eventcount
}
LVL1 functions
{
        constructor:
                maxtime = 0
                diskaddr = NOADDRESS
                eventcount = 0
}


LVL2 structure
{
        TIME64   maxtime
        long     offset
        LVL1*    lvl1
}
LVL2 functions
{
        constructor:
                maxtime = 0
                offset = 0
                lvl1 = NULL
}
```

```
LVL3 structure
{
        TIME64  maxtime
        long    offset
        LVL2*   lvl2
}
LVL3 functions
{       constructor:
                maxtime = 0
                offset = 0
                lvl1 = NULL
}


// The B+ tree indices stucture looks like this:


ROOTVEC type
{
        A ROOTVEC is a dynamic array type that supports
        automatic resizing of an array to support any
        index.
}
attrtable class
{
        char*   name
        char*   value
}
attrtable class functions
{
        An attrtable (attribute table) is a hashtable that
        supports the following functions:

        constructor, destructor, addvalue (that adds a value to
        the active name in an attrtable), getvalue (that returns
        the value associated with an active name in an attrtable),
        getname (that returns the active name associated with an
        attrtable), find (that finds a name in an attrtable and
        makes it active), size (that returns the size of the
        attrtable), getnext (that makes the next name active in
        an attrtable).

        An attrtable also supports an "attriter" (attribute
        iterater) that iterates from attribute to attribute.
}
```

```
TRACE structure
{
        int     initstate
        int     tr_mode
        int     eventcount
        int     statecount
        int     lvl3total
        int     clvl3
        int     clvl2
        int     clvl1
        int     currentevent
        long    idx_addr
        TIME64  blocktime
        attrtable            tattrTab
        ROOTVEC root
        LVL3*   aroot
        EVENT*  eventbuf
        EVENT*  statebuf
}
TRACE functions
{
        constructor:
                initstate = -1
                tr_mode = -1
                eventcount = 0
                statecount = 0
                lvl3total = 0
                clvl3 = 0
                clvl2 = 0
                clvl1 = 0
                currentevent = 0
                idx_addr = NOADDRESS
                blocktime = 0
                aroot = NULL
                eventbuf = NULL
                statebuf = NULL
}
```

```
NAMECELL structure
{
        char*    name
        int      type
        long     index
        NAMECELL          *next
}


nametable class
{
        NAMECELL*         ptr
}
nametable class functions
{
        A nametable is a hashtable that supports the following
        functions:

        constructor, destructor, addname (that adds a name to
        a nametable), getname (that returns the active name
        associated with the nametable), find (that finds a name
        in an nametable and makes it active), size (that returns
        the size of the nametable), getnext (that makes the next
        name active in an nametable), sametype (that returns
        whether an active name in the nametable is of the
        indicated type), getptr (that returns the pointer to
        the active name).

        A nametable also supports a niter (a nametable iterater)
        that iterates from name to name in the nametable.
}


MAPTABLE Structure
{
        A MAPTABLE structure is an n X m array of integers, where
        n is the total number of digital event sources and m is
        the maximum number of event states for one source. In this
        implementation, n is four for the following digital event
        sources: HILO, SIMPAGE_1, COMPARATOR_1 and HP16500_1. In
        this implementation, m is 26. Hilo has 26 states. This is
        greater than any other source. The purpose of the table is
        to return a mapped state based on a particular source and
        a particular state. The values in the table are set in the
        DRmaplogic function.
}
```

```
DRDS Structure
{
        FILE*    fileptr
        char*    filename
        int      mode
        int      logic
        int      machine
        int      origin
        int      maxstate
        long     currentaddr
        long     tracecount
        long     trvec_addr
        long     *traceaddr
        TIME64   start
        TIME64   end
        TIME64   maxtime
        nameiter ·        niter
        NAMECELL          *currenttrace
        NAMECELL          *currenttype
        tracevec          trace
        attrtable         gattrTab
        nametable         nameTab
        MAPTABLE          *maptable
}
DRDS functions
{
        constructor:
                filename = NULL
                fileptr = NULL
                mode = -1
                logic = 0
                machine = 0
                origin = 0
                maxstate = -1
                currentaddr = NOADDRESS
                tracecount = 0
                trvec_addr = NOADDRESS
                traceaddr = NULL
                start = 0
                end = 0
                maxtime = 0
                niter = NULL
                currenttrace = NULL
                currenttype = NULL
                gattrTab["origin"] = "0, Unspecified"
                gattrTab["DRDSversion"] = "Version 1.0"
                gattrTab["crdate"] = ""
                gattrTab["ctname"] = ""
                gattrTab["timescale"] = "-1,Unspecified"
}
```

```
FLAG structure
{
        long    status          // either COMPLETE or INCOMPLETE
        long    address         // NOADDRSS or global data block
                                                        address
}


TRBLOCK structure
{
        int     initstate
        int     tr_mode
        int     tattr_total
        int     tattr_size
        int     lvl3total
        long    tattr_addr
        long    idx_addr
}
TRBLOCK functions
{
        constructor:
                initstate = -1
                tr_mode = 0
                tattr_total = 0
                tattr_size = 0
                lvl3total = 0
                tattr_addr = NOADDRESS
                idx_addr = NOADDRESS
}


GLOBAL_BLOCK structure
{
        int     machine
        int     gattr_total
        int     gattr_size
        long    itype_addr
        long    namebuf_addr
        long    namebuf_size
        long    gattr_addr
        long    tracecount
        long    trvec_addr
        TIME64  maxtime
}
GLOBAL_BLOCK functions
{
        constructor:
                machine = 0
                gattr_total = 0
                gattr_size = 0
                itype_addr = NOADDRESS
                namebuf_addr = NOADDRESS
                namebuf_size = 0
                gattr_addr = NOADDRESS
                tracecount = 0
                trvec_addr = NOADDRESS
                maxtime = TIME64(0)
}
```

```
struct ITYPE
{
        long    index
        int     type
}




struct LEAFNODE
{
        time64  time
        long    offset
}
```

Table 1 shows data structure diagrams for various complex data structures used in the preceding DRDS functions. Some of the data structures, TIME64 for example, are encapsulations that support both data and inherent functions.

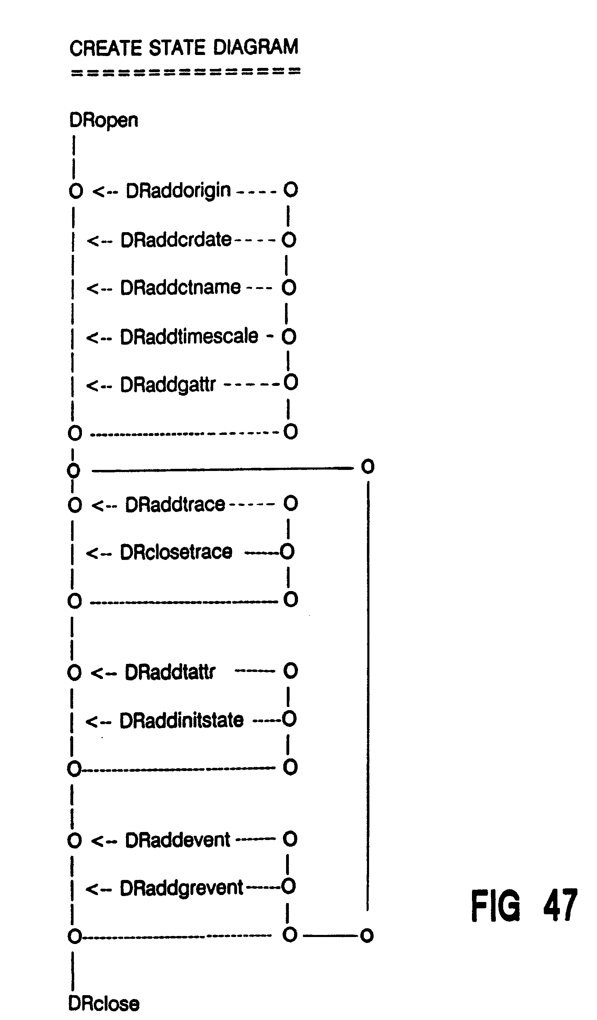

Figure 47 shows a state diagram for creating a DRDS. To create a Digital Results Data Set, call the DRopen function. Then optionally call functions to add global data to the data set. This data includes the data origin, the creation date, the circuit name associated with this data, the time scale of the data and any other user defined global data attributes. This data may be added with these functions: DRaddorigin, DRaddcrdate, DRaddctname, DRaddtimescale and DRaddgattr. If these functions are not called, default values are inserted for the data fields. An origin must be added before adding events. This allows event checking. After adding global data an application will generally follow one of two courses. The first course is: add a trace, add all trace attributes for the trace, add all events for the trace, then close the trace and repeat for all remaining traces. The second course is: add all traces, add all trace attributes for all traces, add all events for all traces. Since DRaddtrace returns the index required by the trace attribute and trace event functions, it must be executed before those functions. Since DRopen returns the data set pointer required by all other functions it must be executed before them. Since DRaddorigin provides the origin to allow event checking to occur, it is required before events may be added. Call DRclose to finish the DRDS session.

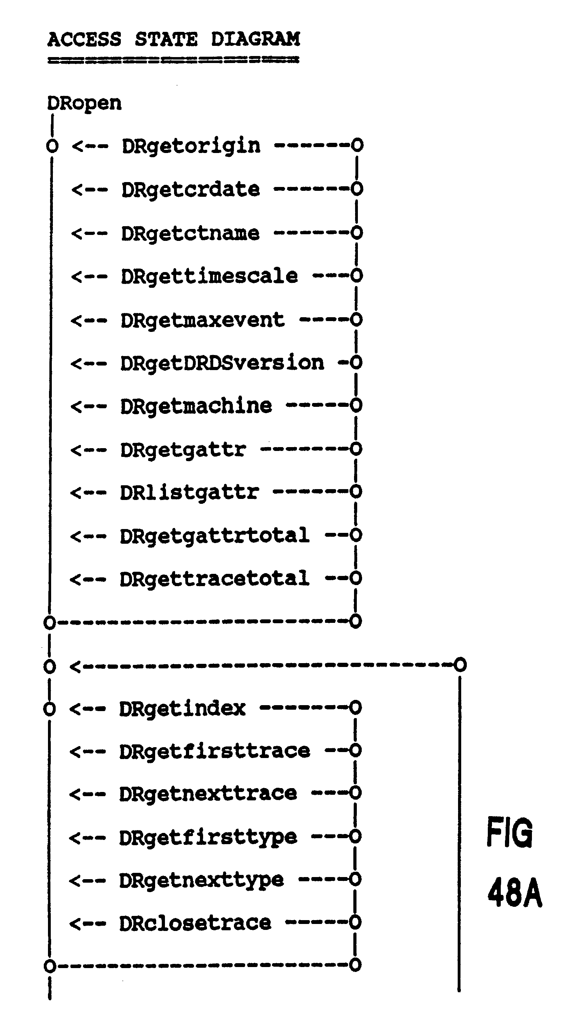

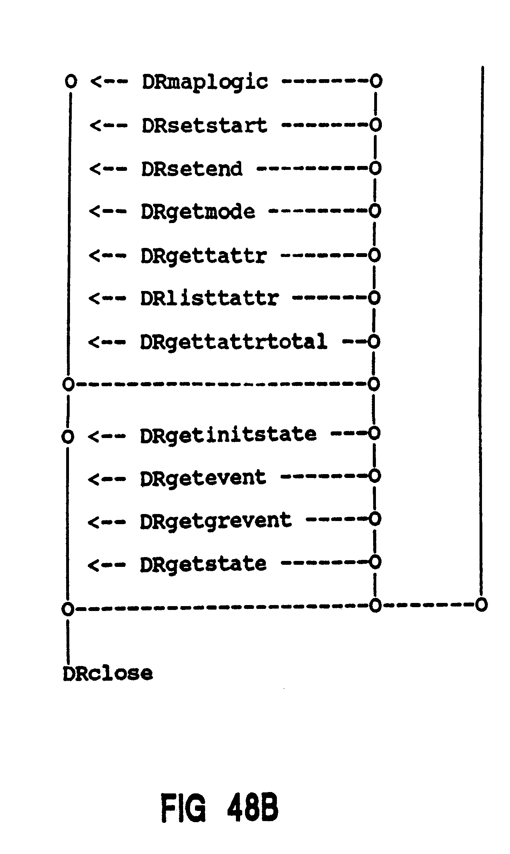

Figure 48 shows a state diagram for accessing a DRDS. To access a Digital Results Data Set, call the DRopen function. Use the pointer that is returned in all further functions. Optionally use any of the functions in the first group to access global data for the DRDS. This data includes the origin, creation date, circuit name, time scale, max event time, DRDS version string, machine type, trace total and any user defined global attributes. The second group of commands provide three sets of functions to access traces. Each function provides access to the trace index which is required to obtain trace data or events. Functions to access trace-specific data or modify how events are accessed are shown in group three. Group four shows four functions for accessing events. The usual sequence of actions would be for an application to open a DRDS, access global data, access trace data including the trace index, map logic levels and set the start and end time if required, get the initial state and then get events for the trace. An alternative would be to get the indices for all of the required traces, get trace data for all traces and then get events for all traces. The final action should be to close the Digital Results Data Set with DRclose.

## Claims

1. Apparatus for management of non-uniform data comprising:
   means for creating a first original file containing non-uniform data; and
   means for accessing the first original file and mapping the non-uniform data into a first common data set according to a predetermined mapping definition.

2. Apparatus as in claim 1 wherein non-uniform data comprises digital events wherein each event corresponds to a particular trace of a circuit under test and comprises a time and a corresponding trace state from a set of trace states valid for use in a first application wherein the first application is one of a plurality of applications which create and access non-uniform data.

3. Apparatus as in claim 2 wherein the first common data set is one of a plurality of common data sets wherein each element of a common data set comprises a time and trace state corresponding to a set of trace states valid for use in the plurality of applications.

4. Apparatus as in claim 3 wherein the predetermined mapping definition generates a trace state from the first common data set corresponding to a trace state from the first original file.

5. Apparatus as in claim 1 wherein the creating means and accessing means are suitable for incorporation in a plurality of existing applications which create and access non-uniform data.

6. Apparatus for management of non-uniform data comprising:
means for creating a first original file containing non-uniform data wherein the non-uniform data is valid for use in a first application wherein the first application is one of a plurality of applications which create and access non-uniform data; and
means for accessing the first original file and mapping the non-uniform data into a first common data set according to a predetermined mapping definition wherein the first common data set is one of a plurality of common data sets valid for use in the plurality of applications.

7. Apparatus as in claim 6 wherein the creating means and accessing means are suitable for incorporation in the plurality of applications which create and access non-uniform data.

8. Apparatus for management of non-uniform data comprising:
means incorporated in a first application for creating a first original file containing non-uniform data wherein the non-uniform data is valid for use in the first application wherein the first application is one of a plurality of applications which create and access non-uniform data; and
means incorporated into a second application which is one of the plurality of applications which create and access non-uniform data for accessing the first original file and mapping the non-uniform data into a first common data set according to a predetermined mapping definition wherein the first common data set is one of a plurality of common data sets valid for use in the plurality of applications.

9. Method of managing non-uniform data comprising the steps of:
creating a first original file containing non-uniform data;
accessing the first original file; and
mapping the non-uniform data into a first common data set according to a predetermined mapping definition.

10. Method as in claim 9 wherein non-uniform data comprises digital events wherein each event corresponds to a particular trace of a circuit under test and comprises a time and a trace state corresponding to the time from a set of trace states valid for use in a first application wherein the first application is one of a plurality of applications which create and access non-uniform data.

11. Method as in claim 10 wherein the first common data set is one of a plurality of common data sets wherein each element of a common data set comprises a time and trace state corresponding to a set of trace states valid for use in the plurality of applications.

12. Method as in claim 11 wherein the step of mapping comprises generating a trace state from the first common data set corresponding to a trace state from the first original file according to the predetermined mapping definition.

13. Method as in claim 9 wherein the step of creating is in response to a first application output and the steps of accessing and mapping are in response to a second application request for input wherein the first and second applications are two of a plurality of existing applications which create and access non-uniform data.

14. Method for data management comprising the steps of:
incorporating a means for creating a first original file containing non-uniform data wherein the non-uniform data is valid for use in a first application wherein the first application is one of a plurality of applications which create and access non-uniform data;

incorporating a means for accessing the first original file and mapping the non-uniform data into a first common data set according to a predetermined mapping definition in a second application wherein the second application is one of the plurality of applications which create and access non-uniform data;

creating the first original file containing non-uniform data in response to the creation of output by the first application;

accessing the first original file in response to a request from the second application for input from the first original file; and

mapping the non-uniform data into a first common data set according to a predetermined mapping definition as the second application requires input.

15. Method for management of non-uniform data as in claim 14 wherein the first common data set is one of a plurality of common data sets valid for use in the plurality of applications.

# FIG 1A

```
                    ( DRopen )
                        │
101 ┌───────────────────────────────────────────┐
    │         DRDSptr = new(DRDS)                │
    └───────────────────────────────────────────┘
                        │
102 ┌───────────────────────────────────────────┐
    │    DRDSptr->fileptr = open(file, mode)     │
    └───────────────────────────────────────────┘
                        │
103 ┌───────────────────────────────────────────┐
    │        DRDSptr->filename = file            │
    └───────────────────────────────────────────┘
                        │
```

```
              mode
               ==              Y
               "w"        ──────────────┐
                                        │
 104                                    ▼
          N              105 ┌───────────────────────────────┐
                             │   DRDSptr->mode = CREATE       │
                             └───────────────────────────────┘
                                        │
                         106 ┌───────────────────────────────┐
                             │  DRDSptr->currentaddr = 0      │
                             └───────────────────────────────┘
                                        │
                         107 ┌───────────────────────────────┐
                             │       flag = new(FLAG)         │
                             └───────────────────────────────┘
                                        │
                         108 ┌───────────────────────────────┐
                             │   flag.status = INCOMPLETE     │
                             └───────────────────────────────┘
                                        │
                         109 ┌───────────────────────────────┐
                             │  flag.address = NOADDRESS      │
                             └───────────────────────────────┘
                                        │
                         110 ┌───────────────────────────────┐
                             │   write flag at address 0      │
                             └───────────────────────────────┘
                                        │
                                        ▼
          ▼
                TO FIG 1B
```

111 ┌─────────────────────────────────┐
    │ DRDSptr->mode = ACCESS          │
    └─────────────────────────────────┘

112 ┌─────────────────────────────────┐
    │ read_globals()                  │
    └─────────────────────────────────┘

113 ┌─────────────────────────────────┐
    │ null out DRDSptr->trace array   │
    └─────────────────────────────────┘

FROM
FIG
1A

( RETURN DRDSptr )

114

# FIG 1B

## FIG 2A

```
        ( read_globals )  201
              |
  +---------------------------+
  |   read flag at address 0  |
  +---------------------------+
              |
              |        202
         +---------+  Y      203
        / flag.status \    +-----------------------------------+
       /     ==        \--->( RETURN E_DRDS_INCOMPLETE_DRDS )
        \ INCOMPLETE  /    +-----------------------------------+
         +---------+
              | N
              |                                    204
  +-------------------------------------------+
  | read global data into GLOBAL_BLOCK        |
  | structure using flag.address              |
  +-------------------------------------------+
              |                                    205
  +-------------------------------------------+
  | check data for correctness                |
  +-------------------------------------------+
              |                                    206
  +-------------------------------------------+
  | assign data to DRDS structure             |
  +-------------------------------------------+
              |                                    207
  +-------------------------------------------+
  | read global attributes using gattr_addr   |
  | in GLOBAL_BLOCK                           |
  +-------------------------------------------+
              |                                    208
  +-------------------------------------------+
  | assign global attributes to DRDSptr->gattrTab |
  +-------------------------------------------+
              |                                    209
  +-------------------------------------------+
  | read trace names using namebuf_addr       |
  | in GLOBAL_BLOCK                           |
  +-------------------------------------------+
              |                                    210
  +-------------------------------------------+
  | read trace indices and trace types into itype |
  | array using itype_addr in GLOBAL_BLOCK    |
  +-------------------------------------------+
              |                                    211
  +-------------------------------------------+
  | assign trace names, trace types and trace |
  | indices to DRDSptr->nameTab               |
  +-------------------------------------------+
              |
              V      TO FIG 2B
```

read individual trace block addresses into
DRDSptr->traceaddr using trvec_addr in
GLOBAL_BLOCK

212

assign correct origin to DRDSptr->origin

213

assign correct maxstate to DRDSptr->maxstate

214

RETURN E_DRDS_SUCCESS

215

# FIG 2B

DRaddorigin

add origin to DRDSptr->gattrTab("origin")   301

set DRDSptr->maxstate based on origin   302

set DRDSptr->origin   303

RETURN E_DRDS_SUCCESS   304

# FIG 3

DRaddcrdate

convert crdate to date string   401

add date string to DRDSptr->gattrTab("crdate")   402

RETURN E_DRDS_SUCCESS   403

# FIG 4

DRaddctname

add ctname to DRDSptr->gattrTab("ctname")    501

RETURN E_DRDS_SUCCESS    502

# FIG 5

DRaddtimescale

timescale
< 0 OR
> 18

601

Y — RETURN E_DRDS_INVALID_TSCALE

602

N

convert timescale to string    603

add string value to DRDSptr->gattrTab("timescale")

RETURN E_DRDS_SUCCESS    605

604

# FIG 6

DRaddgattr

701 name
==
NULL

Y

RETURN E_DRDS_INVALID_NAME

702

703

N

add value to DRDSptr->gattrTab(name)

704

RETURN E_DRDS_SUCCESS

# FIG 7

```
        ┌──────────────────────────────────┐
        │            DRaddtrace            │
        └──────────────────────────────────┘
                         │                        801
        ┌──────────────────────────────────┐
        │      check trace name and type    │
        └──────────────────────────────────┘
                         │                        802
        ┌──────────────────────────────────┐
        │   NAMECELL *np = new(NAMECELL)    │
        └──────────────────────────────────┘
                         │                        803
        ┌──────────────────────────────────┐
        │    assign trace name to np->name  │
        └──────────────────────────────────┘
                         │                        804
        ┌──────────────────────────────────┐
        │    assign trace type to np->type  │
        └──────────────────────────────────┘
                         │                        805
        ┌──────────────────────────────────┐
        │ assign DRDSptr->tracecount to np->index │
        └──────────────────────────────────┘
                         │                        806
        ┌──────────────────────────────────┐
        │   increment DRDSptr->tracecount   │
        └──────────────────────────────────┘
                         │                        807
        ┌──────────────────────────────────┐
        │       assign NULL to np->next      │
        └──────────────────────────────────┘
                         │                        808
        ┌──────────────────────────────────┐
        │   add np to DRDSptr->nameTab(name) │
        └──────────────────────────────────┘
                         │                        809
        ┌──────────────────────────────────┐
        │ DRDSptr->trace[np->index] = new(TRACE) │
        └──────────────────────────────────┘
                         │
        ┌──────────────────────────────────┐
        │         RETURN np->index          │      810
        └──────────────────────────────────┘
```

# FIG 8

DRaddtattr

name
==
NULL

901

Y

RETURN E_DRDS_INVALID_NAME

902

903

N

check index

add value to DRDSptr->trace[index]->tattrTab(name)

905

904

RETURN E_DRDS_SUCCESS

# FIG 9

DRaddinitstate _1001_

check index

_1002_

state
<
0 — Y — RETURN E_DRDS_INVALID_STATE _1003_

N

_1004_

state
>
DRDSptr->
maxstate — Y — RETURN E_DRDS_INVALID_STATE _1005_

N

DRDSptr->trace[index]->initstate = state _1006_

RETURN E_DRDS_SUCCESS

_1007_

# FIG 10

DRaddevent

1101

check index

1102

event.state
<
0

Y → RETURN E_DRDS_INVALID_STATE

1103

N

1104

event.state
>
DRDSptr->
maxstate

Y → RETURN E_DRDS_INVALID_STATE

1105

N

1106

TIME64 time = event.time1, event.time0

1107

time
< DRDSptr->
trace[index]->
blocktime

Y → RETURN E_DRDS_INVALID_TIME

1108

N

1109

add event to DRDSptr->trace[index]->eventbuf

1110

increment DRDSptr->trace[index]->eventcount

↓TO FIG 11B

# FIG 11A

DRDSptr->
trace[index]->
eventcount ==
BUFFERLIMIT

Y

N

1111

addgroup()

1112

1113

DRDSptr->trace[index]->
eventcount = 0

RETURN E_DRDS_SUCCESS

1114

# FIG 11B

addgroup

address = DRDSptr->currentaddr

1201

count = DRDSptr->trace[index]->eventcount

1202

write events in DRDSptr->trace[index]->
eventbuf to file

1203

add address and count to next block
in indices structure for trace

1204

RETURN E_DRDS_SUCCESS

1205

# FIG 12

FIG 13

DRgetorigin

1401 — get "origin" from DRDSptr->gattrTab

1402 — origin not found —Y→ RETURN E_DRDS_CORRUPT_DRDS

1403

N

1404 — convert origin to integer

1405 — RETURN origin

# FIG 14

DRgetcrdate

1501 — get "crdate" from DRDSptr->gattrTab

1503

1502 — crdate not found — Y → RETURN E_DRDS_CORRUPT_DRDS

N

1504 — convert crdate to integer

1505 — assign date to crdate parameter

RETURN E_DRDS_SUCCESS

1506

# FIG 15

FIG 16

EP 0 433 071 A2

```
              ╭──────────────────────────╮
              │      DRgettimescale       │
              ╰──────────────────────────╯
                          │
                          │                              1701
         ┌────────────────────────────────────────┐    ╱
         │  get "timescale" from DRDSptr->gattrTab │───╯
         └────────────────────────────────────────┘
                          │
         1702             │
            ╲         ╱───┴────╲            1703
             ╲      ╱ timescale  ╲  Y      ╱
              ╲    │  not         │──────╭────────────────────────────────╮
                   │  found       │      │ RETURN E_DRDS_CORRUPT_DRDS      │
                    ╲            ╱        ╰────────────────────────────────╯
         1704        ╲────┬────╱
            ╲             │ N
             ╲           ▼
         ┌────────────────────────────────────────┐
         │       convert timescale to integer      │
         └────────────────────────────────────────┘
                          │
              ╭──────────────────────────╮
              │     RETURN timescale      │──── 1705
              ╰──────────────────────────╯
```

# FIG 17

EP 0 433 071 A2

```
         ┌─────────────────────────────┐
         (        DRgetmaxevent         )
         └─────────────────────────────┘
                        │                        ╱1801
         ┌─────────────────────────────────┐
         │ time1 parameter = DRDSptr->maxTime.time1 │  ╲1802
         └─────────────────────────────────┘
                        │
         ┌─────────────────────────────────┐
         │ time0 parameter = DRDSptr->maxTime.time0 │
         └─────────────────────────────────┘
                        │
         ┌─────────────────────────────────┐
         (     RETURN E_DRDS_SUCCESS      )
         └─────────────────────────────────┘
                                              1803
```

# FIG 18

DRgetDRDSversion

get "DRDSversion" from DRDSptr->gattrTab — 1901

1902

DRDSversion not found

Y

1903

RETURN E_DRDS_CORRUPT_DRDS

1904

N

assign DRDSversion to DRDSversion parameter

RETURN E_DRDS_SUCCESS — 1905

## FIG 19

DRgetmachine

RETURN DRDSptr->machine

2001

## FIG 20

**FIG 21**

DRllistgattr

int size = DRDSptr->gattTab.size — 2201

2202

size <= GATTR_MINIMUM — Y → RETURN 0

2203

N

size = 0 — 2204

2205

FOR each DRDSptr->gattrTab name — EXIT

Y ← name == "origin" — 2206

N

Y ← name == "crdate" — 2207

N

Y ← name == "ctname" — 2208

N

Y ← name == "time scale" — 2209

N

FIG 22A

name
==
"DRDS
version" — 2210

Y

N — 2211

increment size

stringvec[size] = name

2212

FROM
FIG
22A

assign string vector to gattrvec

2213

RETURN size

# FIG 22B

**FIG 23**

EP 0 433 071 A2

EP 0 433 071 A2

DRgettracetotal

2401 — RETURN DRDSptr->tracetotal

## FIG 24

EP 0 433 071 A2

```
                    ( DRgetindex )
                          |
                                                    _____ 2501
     |  resp = DRDSptr->nameTab.find(tracename)  |
                          |
    2502                  |                    2503
         \                |                      \
          < resp          >         N      ( RETURN E_DRDS_NO_DATA )
          < ==            >  ------->
          < FALSE         >
                |
                | Y                                      2504
                v                                         \
     | NAMECELL  *np = DRDSPTR->nameTab.getptr()  |
                          |
     | choose correct name from np linked list    |
     | based on tracetype and caseflag            |
     2505                 |
          ( RETURN np->index )
                                          \___ 2506
```

# FIG 25

```
                    ┌─────────────────────────────┐
                    │        DRgetfirsttrace       │
                    └─────────────────────────────┘
                                   │                        2601
        ┌──────────────────────────────────────────────┐
        │ assign DRDSptr->nameTab name iterator          │
        │ to DRDSptr->niter                              │
        └──────────────────────────────────────────────┘
                                   │                        2602
        ┌──────────────────────────────────────────────┐
        │ DRDSptr->currenttrace  =  DRDSptr->niter       │
        └──────────────────────────────────────────────┘
                                   │                        2603
        ┌──────────────────────────────────────────────┐
        │ increment DRDSptr->niter                       │
        └──────────────────────────────────────────────┘
                                   │                        2604
        ┌──────────────────────────────────────────────┐
        │ assign tracename, tracetype and                │
        │ index from DRDSptr->currenttrace               │
        └──────────────────────────────────────────────┘
                                   │
                    ┌─────────────────────────────┐
                    │    RETURN E_DRDS_SUCCESS     │
                    └─────────────────────────────┘
                                                            2605
```

# FIG 26

FIG 27

EP 0 433 071 A2

DRgetfirsttype

resp = DRDSptr->nameTab.find(tracename)     2801

2802

resp == FALSE     Y     2803

RETURN E_DRDS_NO_DATA

N

2804

DRDSptr->currenttype = DRDSPTR->nameTab.getptr()

assign tracetype and index from DRDSptr->currenttype

2805

RETURN E_DRDS_SUCCESS

2806

# FIG 28

DRgetnexttype

2901

DRDSptr->
currenttype
== NULL
— Y → RETURN E_DRDS_SEQUENCE_ERROR

2902

N

2903

DRDSptr->
currenttype
->next != NULL
— Y →

N

DRDSptr->currenttype =
DRDSptr->currenttype->next

2904

assign tracetype and index
from DRDSptr->currenttype

2905

RETURN E_DRDS_SUCCESS

2906

2907

RETURN E_DRDS_NO_DATA

# FIG 29

EP 0 433 071 A2

```
                    DRgetmode

                           3001
              DRDSptr->          Y
              trace[index]
              == NULL
                        N
                                     3002

                                 read_trace()

       3003

  RETURN DRDSptr->trace[index]->tr_mode
```

# FIG 30

```
            ┌─────────────────┐
            (   read_trace    )
            └─────────────────┘
                     │
   ┌─────────────────────────────────────┐
   │  trblock = new(TRBLOCK)             │
   │                                      │
   └─────────────────────────────────────┘  ╲ 3101
                     │
   ┌─────────────────────────────────────┐
   │  read trace data into trblock using │  3102
   │  address in DRDSptr->traceaddr[index]│
   └─────────────────────────────────────┘
                     │
   ┌─────────────────────────────────────┐
   │  DRDSptr->trace[index] = new(TRACE) │  3103
   └─────────────────────────────────────┘
                     │
   ┌─────────────────────────────────────┐
   │  assign values from trblock to      │  3104
   │  DRDSptr->trace[index]              │
   └─────────────────────────────────────┘
                     │                        3105
   ┌─────────────────────────────────────┐
   │  read trace attributes into char buffer │
   │  using address in trblock.tattr_addr │  3106
   └─────────────────────────────────────┘
                     │
   ┌─────────────────────────────────────┐
   │  add trace attributes to            │
   │  DRDSptr->trace[index]->tattrTab    │
   └─────────────────────────────────────┘
                     │
       ( RETURN E_DRDS_SUCCESS )── 3107
```

# FIG 31

DRgettattr

3201

DRDSptr->
trace[index]
== NULL

Y

N    3202    read_trace()

3203

resp = DRDSptr->trace[index]->
tattrTab.find(tattrname)

3204

resp
==
FALSE

Y

RETURN E_DRDS_NO_DATA

3205

N

3206

tattrvalue = DRDSptr->trace[index]->
tattrTab.getvalue

3207

RETURN E_DRDS_SUCCESS

FIG 32

DRlisttattr

DRDSptr->
trace[index]
== NULL — Y

N  3301

3302 — read_trace()

3303
size = DRDSptr->trace[index]
->tattrTab.size

3304
size
==
0 — Y — 3305 RETURN 0

N

3306
iterate through the names in DRDSptr->
trace[index]->tattrTab assigning
each name to the tattrvec parameter

RETURN size — 3307

# FIG 33

DRgettattrtotal

3401

DRDSptr->
trace[index]
== NULL

Y

N

3402

read_trace()

3403

size = DRDSptr->trace[index]
->tattrTab.size

3404

RETURN size

**FIG 34**

DRmaplogic

3501

check correct value for levels

3502

check correct value for DRDSptr->origin

3503

DRDSptr->logic = levels

3504

assign correct values to DRDSptr->maptable
for this logic level

3505

RETURN E_DRDS_SUCCESS

**FIG 35**

3601

DRsetstart

DRDSptr->start.time1 = time1

3602

DRDSptr->start.time0 = time0

3603

RETURN E_DRDS_SUCCESS

# FIG 36

DRsetend

DRDSptr->end.time1 = time1  —— 3701

DRDSptr->end.time0 = time0  —— 3702

RETURN E_DRDS_SUCCESS  —— 3703

# FIG 37

DRgetinitstate

3801

DRDSptr->
trace[index]
== NULL

Y

N

3802

read_trace()

3803

DRDSptr->
trace[index]->
clvl3 == -1

Y

N

3804

setupindices()

3805

resetindices()

3806

RETURN DRDSptr->trace[index]->initState

FIG 38

# FIG 39A

setupindices

3901 — create new DRDSptr->trace[index]aroot
using the dimension, DRDSptr->lvl3total

3902 — Inode = new LEAFNODE[LEVELMAX]

3903 — read LVL3 indices into Inode using
address in DRDSptr->trace[index]->idx_addr

3904 — assign values in Inode to aroot

FOR each LVL3 node in aroot — EXIT

3905

create new aroot.lvl2 with the dimension LEVELMAX

3906

read LVL2 indices into Inode using address in aroot

3907

assign values in Inode to correct cell in aroot.lvl2

3908

FOR each LVL2 node in aroot.lvl2 — EXIT

3909

create new aroot.lvl2.lvl1 using the dimension LEVELMAX

3910

read LVL1 indices into Inode using address in aroot.lvl2

3911

assign values in Inode to correct cell in aroot.lvl2.lvl1

3912

assign zero to clvl3, clvl2 and clvl1 in DRDSptr->trace[index]

3914

RETURN E_DRDS_SUCCESS

3915

FIG 39B

resetindices

set DRDSptr->trace[index]->clvl3 to point
to the LVL3 in DRDSptr->trace[index]->aroot
with the DRDSptr->start time

4001

set DRDSptr->trace[index]->clvl2
to point to the LVL2 (in the right
LVL3) containing the DRDSptr->start time

4002

set DRDSptr->trace[index]->clvl1
to point to the LVL1 (in the right
LVL2) with the DRDSptr->start time

4003

fill DRDSptr->trace[index]->eventbuf
with the current block of events

4004

set DRDSptr->trace[index]->currentevent
to point to the correct event in the
eventbuf => DRDSptr->start time

4005

RETURN E_DRDS_SUCCESS

4006

# FIG 40

DRgetevent

4101 DRDSptr->
trace[index]
== NULL

4102 read_trace()

4103 DRDSptr->
trace[index]->
clvl3 == -1

4104 setupindices()

resetindices()
4105

4106 DRDSptr->
trace[index]->
lvl3total == 0

RETURN E_DRDS_NO_DATA
4107

4108 fill DRDSptr->trace[index]->eventbuf
if necessary. If no data, return
E_DRDS_NO_DATA

4109 assign e->time1 from current event in
DRDSptr->trace[index]->eventbuf

# FIG 41A

4110

assign e->time0 from current event in
DRDSptr->trace[index]->eventbuf

4111

map the state from the current event in
DRDSptr->trace[index]->eventbuf into
e->state according to DRDSptr->logic
and DRDSptr->maptable

4112

increment DRDSptr->trace[index]->
eventcount

4113

RETURN E_DRDS_SUCCESS

# FIG 41B

FIG 42A

FOR int i = 1 UPTO total DO

EXIT

4208

fill DRDSptr->trace[index]->eventbuf
if necessary. If no data, return i.

4209

4210

assign events[i]->time1 from current event in
DRDSptr->trace[index]->eventbuf

assign events[i]->time0 from current event in
DRDSptr->trace[index]->eventbuf

4211

map the state from the current event in
DRDSptr->trace[index]->eventbuf into
events[i]->state according to DRDSptr->logic
and DRDSptr->maptable

4212

increment DRDSptr->trace[index]->
eventcount

4213

RETURN i

4214

# FIG 42B

FIG 43

```
                        ( DRclosetrace )
                               |
4401                  ┌────────────────────────────────┐
                      │  write out any events for this trace  │
                      └────────────────────────────────┘
4402                           |
                      ┌────────────────────────────────┐
                      │  set DRDSptr->trace[index]->tr_mode to │
4403                  │  the either: NO_EVENTs or YES_EVENTS  │
                      └────────────────────────────────┘
                               |
4404                  ┌────────────────────────────────┐
                      │  delete DRDSptr->trace[index]->eventbuf  │
                      └────────────────────────────────┘
4405                           |
                      ┌────────────────────────────────┐
                      │  delete DRDSptr->trace[index]->statebuf  │
                      └────────────────────────────────┘
4406                           |
                      ┌────────────────────────────────┐
                      │  delete DRDSptr->trace[index]   │
                      └────────────────────────────────┘
                               |
                   ( RETURN E_DRDS_SUCCESS )
```

# FIG 44

# FIG 45A

DRclose

4501 — mode == 'f'

4502 — FOR each trace DO DRclosetrace()

4503 — DRDSptr-> mode == ACCESS

Y

N

4504 — write trace data to file

4505 — write trace addresses to file

4506 — write global data to file

4507 — write COMPLETE flag to file

FIG 45B

FIG 46

EP 0 433 071 A2

## CREATE STATE DIAGRAM
==================

```
DRopen
 |
 |
 O <-- DRaddorigin ---- O
 |                      |
 | <-- DRaddcrdate ---- O
 |                      |
 | <-- DRaddctname --- O
 |                      |
 | <-- DRaddtimescale - O
 |                      |
 | <-- DRaddgattr ----- O
 |                      |
 O -------------------- O
 |
 o ------------------------------ O
 |                      |         |
 O <-- DRaddtrace ----- O         |
 |                      |         |
 | <-- DRclosetrace ---- O        |
 |                      |         |
 O -------------------- O         |
 |                                |
 |                                |
 O <-- DRaddtattr ----- O         |
 |                      |         |
 | <-- DRaddinitstate --- O       |
 |                      |         |
 O -------------------- O         |
 |                                |
 |                                |
 O <-- DRaddevent ----- O         |
 |                      |         |
 | <-- DRaddgrevent ---- O        |
 |                      |         |
 O -------------------- O ------- O
 |
 |
DRclose
```

FIG  47

70

## ACCESS STATE DIAGRAM

DRopen
```
 |
 O <-- DRgetorigin ------O
 |                       |
 | <-- DRgetcrdate ------O
 |                       |
 | <-- DRgetctname ------O
 |                       |
 | <-- DRgettimescale ---O
 |                       |
 | <-- DRgetmaxevent ----O
 |                       |
 | <-- DRgetDRDSversion -O
 |                       |
 | <-- DRgetmachine -----O
 |                       |
 | <-- DRgetgattr -------O
 |                       |
 | <-- DRlistgattr ------O
 |                       |
 | <-- DRgetgattrtotal --O
 |                       |
 | <-- DRgettracetotal --O
 |                       |
 O-----------------------O
 |
 O <--------------------------------O
 |                                  |
 O <-- DRgetindex -------O          |
 |                       |          |
 | <-- DRgetfirsttrace --O          |
 |                       |          |
 | <-- DRgetnexttrace ---O          |
 |                       |          |
 | <-- DRgetfirsttype ---O          |
 |                       |          |
 | <-- DRgetnexttype ----O          |
 |                       |          |
 | <-- DRclosetrace -----O          |
 |                       |          |
 O-----------------------O          |
 |
```

FIG
48A

```
O <-- DRmaplogic --------O
   <-- DRsetstart --------O
   <-- DRsetend ---------O
   <-- DRgetmode --------O
   <-- DRgettattr -------O
   <-- DRlisttattr ------O
   <-- DRgettattrtotal --O
O-------------------------O
O <-- DRgetinitstate ---O
   <-- DRgetevent -------O
   <-- DRgetgrevent -----O
   <-- DRgetstate -------O
O----------------------O------O
DRclose
```

## FIG 48B

**FIG 49**

EP 0 433 071 A2

EP 0 433 071 A2

5001

```
0
1
U
X
Z
H
L
T
W
J
R
V
D
```

NON-UNIFORM
DATA
SET

5002

```
0
1
U
X
Z
```

COMMON
DATA
SET

5003

```
0
1
U
X
Z
H
L
```

COMMON
DATA
SET

**FIG 50**